# EUROPEAN PATENT SPECIFICATION

(11) **EP 3 438 972 B1**
(45) Date of publication and mention of the grant of the patent: **26.01.2022**
(21) Application number: 16897086.1
(22) Date of filing: 14.12.2016
(51) Int. Cl.: G06N 3/04, G10L 13/10, B25J 9/16, G10L 13/02, G10H 7/00, G06N 3/08, G10L 13/033

(54) **INFORMATION PROCESSING SYSTEM AND METHOD FOR GENERATING SPEECH**
INFORMATIONSVERARBEITUNGSSYSTEM UND VERFAHREN ZUR ERZEUGUNG VON SPRACHE
SYSTÈME ET PROCÉDÉ DE TRAITEMENT DE L'INFORMATION POUR LA GÉNÉRATION DE PAROLE

(30) Priority: 28.03.2016 JP 2016063784
(43) Date of publication of application: 06.02.2019
(73) Proprietor: Sony Group Corporation, Tokyo 108-0075 (JP)
(72) Inventor: IDE, Naoki, Tokyo 108-0075 (JP); FUJITA, Takuya, Tokyo 108-0075 (JP); NAKAMURA, Akira, Tokyo 108-0075 (JP); NARIHIRA, Takuya, Tokyo 108-0075 (JP); NAKAHASHI, Ryo, Tokyo 108-0075 (JP)
(74) Representative: MFG Patentanwälte Meyer-Wildhagen Meggle-Freund Gerhard PartG mbB
(86) International application number: PCT/JP2016/087316
(87) International publication number: WO 2017/168870

(56) References cited:
- EP-A1- 3 151 239
- JP-A- H02 304 493
- JP-A- 2007 265 345
- Paul Boersma ET AL: "Speak and unSpeak with PRAAT", Glot International Vol. 5, No. 9/10, November/December 2001, 1 January 2001 (2001-01-01), pages 341-347, XP055138541, Retrieved from the Internet: URL:http://www.fon.hum.uva.nl/paul/papers/ speakUnspeakPraat_glot2001.pdf [retrieved on 2014-09-05]
- WU ZHIZHENG ET AL: "Deep neural networks employing Multi-Task Learning and stacked bottleneck features for speech synthesis", 2015 IEEE INTERNATIONAL CONFERENCE ON ACOUSTICS, SPEECH AND SIGNAL PROCESSING (ICASSP), IEEE, 19 April 2015 (2015-04-19), pages 4460-4464, XP033187604, DOI: 10.1109/ICASSP.2015.7178814
- AKAGI MASATO ET AL: "Toward affective speech-to-speech translation: Strategy for emotional speech recognition and synthesis in multiple languages", SIGNAL AND INFORMATION PROCESSING ASSOCIATION ANNUAL SUMMIT AND CONFERENCE (APSIPA), 2014 ASIA-PACIFIC, ASIA-PACIFIC SIGNAL AND INFORMATION PROCESSING ASS, 9 December 2014 (2014-12-09), pages 1-10, XP032736422, DOI: 10.1109/APSIPA.2014.7041623
- MASAMITSU MURASE: 'Ningen Robot Kyocho no Tameno RNNPB ni yoru Giji Symbol no Kakutoku to sono Kaisosei no Kaiseki' DAI 24 KAI ANNUAL CONFERENCE OF THE ROBOTICS SOCIETY OF JAPAN YOKOSHU September 2006, XP009509224
- TETSUYA OGATA: 'Gesture and Sound Generation of Robot based on Cross-Modal Translation using Recurrent Neural Network with Parametric Bias' IEICE TECHNICAL REPORT vol. 106, no. 298, October 2006, pages 27 - 32, XP009509223

## Description

### Technical Field

The present disclosure relates to an information processing apparatus and an information processing method.

### Background Art

In recent years, attention is being focused on technologies that do not express data in a rigidly uniform manner, but instead characterize the data for expression. For example, Patent Literature 1 below discloses a technology that executes learning using statistical expression indicating intonation features and the like to express natural speech when generating speech data from text.

Paul Boersma et al: "Speak and unSpeak with PRAAT", Glot International Vol. 5, No. 9/10, November/December 2001, pages 341-347 describes a computer program for analyzing, synthesizing, and manipulating speech.

Zhizheng Wu et al: "Deep neural networks employing multi-task learning and stacked bottleneck features for speech synthesis", 2015 IEEE International Conference on Acoustics, Speech and Signal Processing (ICASSP), IEEE, 19 April 2015, pages 4460-4464 describes the use of multi-task learning in a Deep-Neural-Network based speech synthesis.

### Citation List

### Patent Literature

Patent Literature 1: JP H8-508127T

### Disclosure of Invention

### Technical Problem

However, characterizing data appropriately is difficult. To give one example with regard to speech, it is difficult to design a system in which individual voiceprint, intonation, accent, dialect, pausing, pre- and post-conversation context, the current state of the speaker (particularly emotional states), or the like are operable as feature quantities such as numerical values. For this reason, it is desirable to provide a mechanism capable of characterizing data appropriately.

### Solution to Problem

According to a first aspect, the invention provides an information processing system in accordance with independent claim 1. According to a second aspect, the invention provides an information processing method in accordance with independent claim 8 . Further aspects of the invention are set forth in the dependent claims. The drawings and description illustrate the detailed implementation.

### Advantageous Effects of Invention

According to the present disclosure as described above, there is provided a mechanism capable of characterizing speech data appropriately. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an example of a diagrammatic configuration of a system according to an embodiment of the present disclosure.
[FIG. 2] FIG. 2 is a block diagram illustrating an example of a logical configuration of a processing apparatus according to the present embodiment.
[FIG. 3] FIG. 3 is a block diagram illustrating an example of a logical configuration of a terminal apparatus according to the present embodiment.
[FIG. 4] FIG. 4 is a diagram for explaining an overview of an auto-encoder according to the present embodiment.
[FIG. 5] FIG. 5 is a flowchart illustrating an example of the flow of a learning process executed in the processing apparatus according to the present embodiment.
[FIG. 6] FIG. 6 is a sequence diagram illustrating an example of the flow of an interaction process executed in a system according to the present embodiment.
[FIG. 7] FIG. 7 is a sequence diagram illustrating an example of the flow of an interaction process executed in a system according to the present embodiment.
[FIG. 8] FIG. 8 is a diagram illustrating an example of a configuration of an identification network according to a first embodiment.
[FIG. 9] FIG. 9 is a diagram illustrating an example of a configuration of an inference network according to the embodiment.
[FIG. 10] FIG. 10 is a diagram illustrating an example of a configuration of a generation network according to the embodiment.
[FIG. 11] FIG. 11 is a diagram for explaining an example of an inference process according to the embodiment.
[FIG. 12] FIG. 12 is a diagram illustrating an example of a user interface according to the embodiment.
[FIG. 13] FIG. 13 is a diagram illustrating an example of a speech feature information DB according to the embodiment.
[FIG. 14] FIG. 14 is a diagram illustrating an example of a user interface according to the embodiment.
[FIG. 15] FIG. 15 is a diagram for explaining a speech data generation process in a translation situation according to the embodiment.
[FIG. 16] FIG. 16 is a diagram illustrating an example of a configuration of an identification network according to a further illustrative application not covered by the claims.
[FIG. 17] FIG. 17 is a diagram illustrating an example of a configuration of an inference network according to the further application.
[FIG. 18] FIG. 18 is a diagram illustrating an example of a configuration of a generation network according to the further application.
[FIG. 19] FIG. 19 is a flowchart illustrating an example of the flow of a learning process executed in the processing apparatus according to the further application.
[FIG. 20] FIG. 20 is a diagram illustrating an example of a user interface according to the further application.
[FIG. 21] FIG. 21 is a diagram illustrating an example of a configuration of a generation network 15 according to the further application.
[FIG. 22] FIG. 22 is a flowchart illustrating an example of the flow of a learning process executed in the processing apparatus according to the further application.
[FIG. 23] FIG. 23 is a diagram for explaining an example of a control signal generation process according to the further application. .
[FIG. 24] FIG. 24 is a diagram for explaining an example of a control signal generation process according to the further application. .
[FIG. 25] FIG. 25 is a diagram for explaining an example of a control signal generation process according to the further application. .
[FIG. 26] FIG. 26 is a block diagram illustrating an example of a hardware configuration of the information processing apparatus according to the further application.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Hereinafter, the description will proceed in the following order.
1. Introduction
   1.1. Overview of auto-encoder
   1.2. Details of auto-encoder
   1.3. Details of VAE
2. Exemplary configurations
   2.1. Exemplary configuration of system
   2.2. Exemplary configuration of processing apparatus
   2.3. Exemplary configuration of terminal apparatus
3. Basic technical features
4. First embodiment
   4.1. Various data
   4.2. Configuration of neural network
   4.3. Learning
   4.4. Generation of speech data
   4.5. Supplement
5. Further application - not covered by the claims.
   5.1. Various data
   5.2. Configuration of neural network
   5.3. Learning
   5.4. Generation of sensor data
   5.5. Generation of control signal
6. Supplement
7. Hardware configuration example
8. Conclusion

### <<1. Introduction>>

### <1.1. Overview of auto-encoder>

An auto-encoder refers to a technology of a neural network. In this specification, a technology using a variational auto-encoder (VAE) will be described as one example of an auto-encoder. Obviously, technologies other than a variational auto-encoder, such as a generative adversarial network (GAN), for example, may also be used.

Note that auto-encoders are described in detail in Okatani, Takayuki, "Deep Learning", Kodansha, April 8, 2015. Also, VAE are described in detail in Kingma, Diederik P., and Max Welling, "Auto-encoding variational bayes.", arXiv preprint, arXiv:1312.6114 (2013), and also in Kingma, Diederik P., et al., "Semi-supervised learning with deep generative models.", Advances in Neural Information Processing Systems, 2014. Also, GAN are described in detail in Goodfellow, Ian, et al., "Generative adversarial nets.", Advances in Neural Information Processing Systems, 2014.

In addition, as a time-sequence extension of VAE, an auto-encoder combined with a recurrent neural network (RNN) may also be used. RNN are described in detail in Okatani, Takayuki, "Deep Learning", Kodansha, April 8, 2015. Also, auto-encoders combining RNN and VAE are described in detail in Fabius, Otto, and Joost R. van Amersfoort, "Variational recurrent auto-encoders." arXiv preprint arXiv:1412.6581 (2014), in Bayer, Justin, and Christian Osendorfer, "Learning stochastic recurrent networks.", arXiv preprint arXiv:1411.7610 (2014), and in Chung, Junyoung, et al., "A recurrent latent variable model for sequential data.", Advances in neural information processing systems, 2015.

### <1.2. Details of auto-encoder>

An auto-encoder is a function including a neural network. In an auto-encoder, first, like the following formula, data x is input into a first projection function prescribed by a neural network, and temporarily transformed into an intermediate variable z.

[Math. 1] $z = {f}_{ϕ} \left(x\right)$

In the above, ϕ is all weight parameters (including biases) of the first neural network.

Subsequently, like the following formula, the intermediate variable z is input into a second projection function prescribed by a neural network, and reconfigured data x' is output.

[Math. 2] $x ′ = {g}_{θ} \left(z\right)$

In the above, θ is all weight parameters (including biases) of the second neural network.

Herein, the first projection function may also be designated the encoder, and the second projection function may also be designated the decoder. Note that the encoder corresponds to the inference network described later, and the decoder corresponds to the generation network described later.

In the auto-encoder, the first projection function and the second projection function are learned such that the reconfigured data x' approaches the data x. An objective function for learning is expressed by the following formula, for example, given that the learning data set is denoted X={xn}.

[Math. 3] $L \left(ϕ, θ\right) = {\sum }_{n = 1}^{N} {\left({x}_{n}-{g}_{θ}\left({f}_{ϕ}\left({x}_{n}\right)\right)\right)}^{2}$

For example, ϕ and θ that minimize the objective function L illustrated in the above Formula (3) are learned. For example, with the gradient method or the like, learning is executed by updating ϕ and θ such that L becomes smaller, in accordance with a gradient obtained by differentiating the objective function L with respect to each of ϕ and θ.

Whereas the encoder and the decoder are used in combination when learning, the encoder and the decoder may be used separately in situations other than learning. The process by which the encoder calculates the variable z from the data x may also be designated inference. The variable z may also be designated a feature quantity. Also, the process by which the decoder calculates the reconfigured data x' from the variable z may also be designated generation.

### <1.3. Details of VAE>

VAE is a model that introduces the concept of probability into an auto-encoder.

In VAE, the data x and the variable z are handled as random variables. In other words, the first and second projection functions are not deterministic, but probabilistic projections including a sampling from probability distributions p(zlx) and p(xlz). Note that for the posterior probability p(zlx), a probability distribution q(zlx) approximated by the calculus of variations is used. Furthermore, these probability distributions are approximated by distributions decided by a limited number of parameters, like a Gaussian distribution, a Bernoulli distribution, or a multinomial distribution. In the case in which probability distributions parameterized in this way are used, the above probability distributions are expressed like the following formulas.

[Math. 4] $\begin{matrix}q \left(z| x=q\left(z| ϕ \left(x\right)\right)\right) \\ p \left(x| z\right) = p \left(x| θ \left(z\right)\right)\end{matrix}$

Herein, ϕ(x) and θ(z) are projection functions in which each of the parameters ϕ and θ of the probability distributions are the output with respect to the input (x, z).

If the variables of Formula (1) and Formula (2) are considered to be random variables and stochastic processes are included, the formulas of the VAE are also expressible as Formula (1) and Formula (2). Note that in the VAE, unlike the method that minimizes the objective function L illustrated in Formula (3), learning is executed by minimizing model evidence (which is similar to likelihood). Actually, a parameter that maximizes the lower bound of the model evidence is computed. Since detailed formulas have been described in detail in the above literature, a description will be omitted.

### «2. Exemplary configurations»

### <2.1. Exemplary configuration of system>

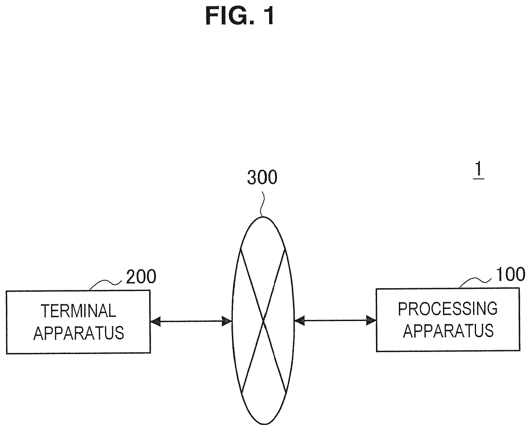

FIG. 1 is a diagram illustrating an example of a diagrammatic configuration of a system according to an embodiment of the present disclosure. As illustrated in FIG. 1, the system 1 includes a processing apparatus 100 and a terminal apparatus 200.

The processing apparatus 100 and the terminal apparatus 200 are connected by a network 300. The network 300 is a wired or wireless transmission line for information transmitted from apparatus connected by the network 300. The network 300 may include, for example, a cellular network, a wired local area network (LAN), a wireless LAN, or the like.

The processing apparatus 100 is an information processing apparatus that executes various processes. The terminal apparatus 200 is an information processing apparatus that functions as an interface with a user. Typically, the system 1 interacts with the user by the cooperative action of the processing apparatus 100 and the terminal apparatus 200.

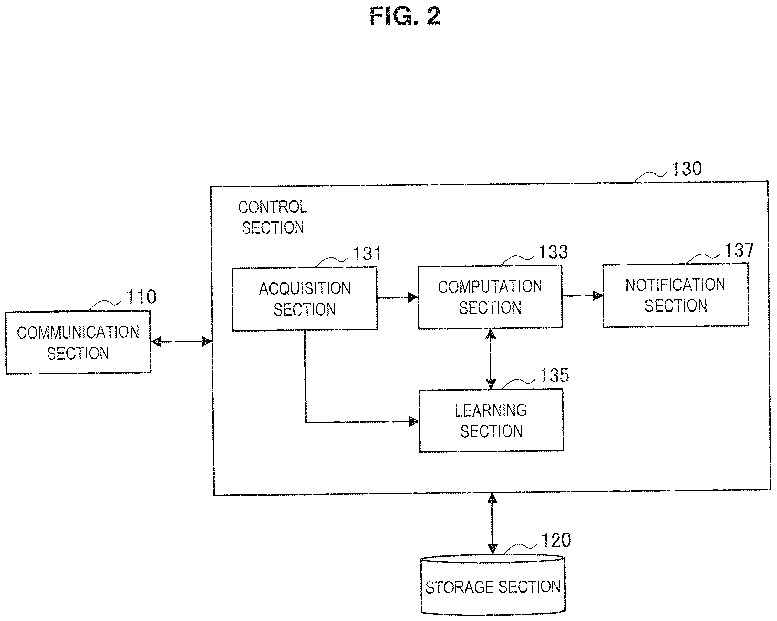

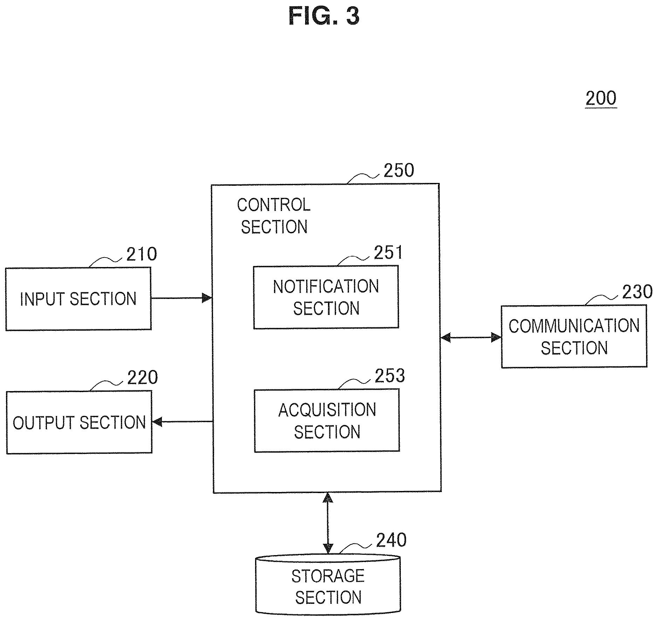

Next, exemplary configurations of each apparatus will be described with reference to FIGS. 2 and 3.

### <2.2. Exemplary configuration of processing apparatus>

FIG. 2 is a block diagram illustrating an example of a logical configuration of the processing apparatus 100 according to the present embodiment. As illustrated in FIG. 2, the processing apparatus 100 includes a communication section 110, a storage section 120, and a control section 130.

### (1) Communication section 110

The communication section 110 includes a function of transmitting and receiving information. For example, the communication section 110 receives information from the terminal apparatus 200, and transmits information to the terminal apparatus 200.

### (2) Storage section 120

The storage section 120 temporarily or permanently stores programs and various data for the operation of the processing apparatus 100.

### (3) Control section 130

The control section 130 provides various functions of the processing apparatus 100. The control section 130 includes an acquisition section 131, a computation section 133, a learning section 135, and a notification section 137. Note that the control section 130 may additionally include other components besides the above components. In other words, the control section 130 may also execute operations besides the operations of the above components.

The operation of each component will be described briefly. The acquisition section 131 acquires information. The computation section 133 executes various computations using the auto-encoder described later. The learning section 135 executes learning related to the auto-encoder described later. The notification section 137 notifies the terminal apparatus 200 of information indicating a result of the computation by the computation section 133. Other detailed operations will be described in detail later.

### <2.3. Exemplary configuration of terminal apparatus>

FIG. 3 is a block diagram illustrating an example of a logical configuration of the terminal apparatus 200 according to the present embodiment. As illustrated in FIG. 3, the terminal apparatus 200 includes an input section 210, an output section 220, a communication section 230, a storage section 240, and a control section 250.

### (1) Input section 210

The input section 210 includes a function of receiving the input of information. For example, the input section 210 receives the input of information from a user. For example, the input section 210 may receive text input by a keyboard, touch panel, or the like, may receive voice input, or may receive gesture input. Otherwise, the input section 210 may receive data input from a storage medium such as flash memory.

### (2) Output section 220

The output section 220 includes a function of outputting information. For example, the output section 220 outputs information through images, sound, vibration, light emission, or the like.

### (3) Communication section 230

The communication section 230 includes a function of transmitting and receiving information. For example, the communication section 230 receives information from the processing apparatus 100, and transmits information to the processing apparatus 100.

### (4) Storage section 240

The storage section 240 temporarily or permanently stores programs and various data for the operation of the terminal apparatus 200.

### (5) Control section 250

The control section 250 provides various functions of the terminal apparatus 200. The control section 250 includes a notification section 251 and an acquisition section 253. Note that the control section 250 may additionally include other components besides the above components. In other words, the control section 250 may also execute operations besides the operations of the above components.

The operation of each component will be described briefly. The notification section 251 notifies the processing apparatus 100 of information indicating user input which is input into the input section 210. The acquisition section 253 acquires information indicating a result of computation by the processing apparatus 100, and causes the information to be output by the output section 220. Other detailed operations will be described in detail later.

### «3. Basic technical features»

Next, basic technical features of the system 1 according to the present embodiment will be described.

### (1) Auto-encoder

The intermediate variable z in the auto-encoder may also be treated as a feature quantity for expressing the data x. The method of treating the intermediate variable z as a feature quantity is effective in cases in which the feature quantities expressing the data x are difficult to design. Being difficult to design refers to, for example, being difficult to acquire as data, being difficult to quantify, having a fusion of multiple concepts, combinations of which are also ambiguous concepts, being unable to sufficiently express as concepts in the first place, and the like. In such cases, it is desirable to express feature quantities by a neural network, and entrust the handling of feature quantities to the neural network.

On the other hand, easy-to-design feature quantities are also conceivable as the information for expressing the data x. Being easy to design refers to, for example, being easy to express as concepts and also being easy to quantify feature quantities corresponding to the concepts. Since easy-to-design feature quantities are feature quantities having a corresponding concept (hereinafter also designated a label), in the following, such feature quantities are also designated labeled feature information (corresponding to first feature information to which meaning is assigned). On the other hand, since difficult-to-design feature quantities expressed by the intermediate variable z are feature quantities lacking a corresponding label, in the following, such feature quantities are also designated unlabeled feature information (corresponding to second feature information to which meaning is not assigned).

Labeled feature information may also be input into the neural network separately from the unlabeled feature information. In this case, Formula (2) indicating the generation network is modified like the following formula.

[Math. 5] $x ′ = {g}_{θ} \left(y, z\right)$

Herein, y is labeled feature information, and z is unlabeled feature information.

Similarly, Formula (1) indicating the inference network is modified like the following formula.

[Math. 6] $z = {f}_{ϕ} \left(x, y\right)$

Furthermore, a model that estimates the labeled feature information y from the data x is also conceivable. If this is taken to be an identification network, the identification network is expressed by the following function.

[Math. 7] $y = {h}_{ϕ} \left(x\right)$

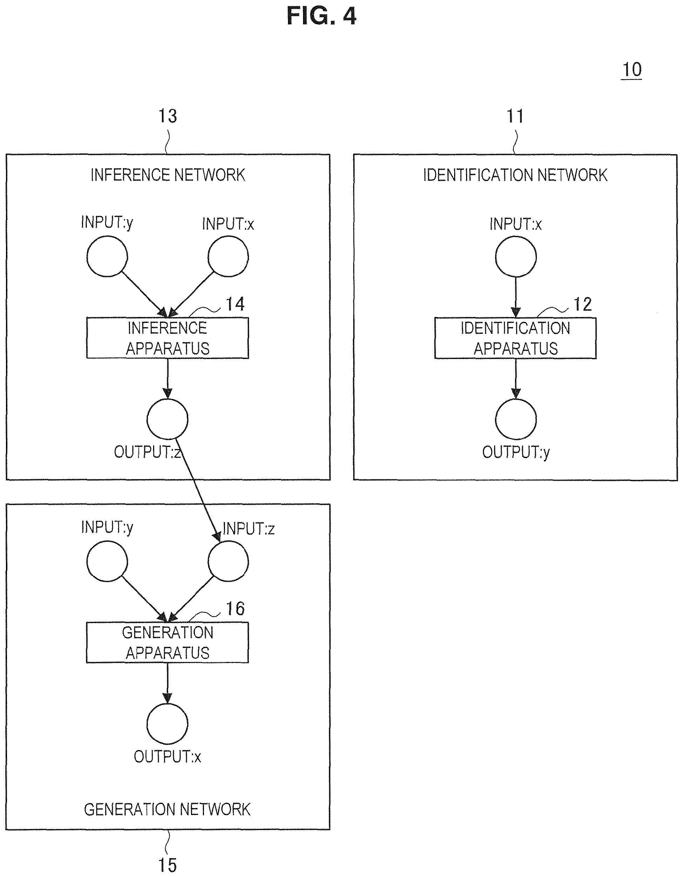

An auto-encoder combining the identification network, the inference network, and the generation network described above is illustrated in FIG. 4.

FIG. 4 is a diagram for explaining an overview of an auto-encoder according to the present embodiment. As illustrated in FIG. 4, the auto-encoder 10 includes an identification network 11, an inference network 13, and a generation network 15.

The identification network 11 includes an identification apparatus 12, which is an identification section that identifies the labeled feature information y from the data x, and which corresponds to the function hϕ(·) illustrated in the above Formula (7).

The inference network 13 includes an inference apparatus 14, which is an inference section that infers the unlabeled feature information z from the data x and the labeled feature information y, and which corresponds to the function fϕ(·) illustrated in the above Formula (6). The inference network 13 may also be thought of as removing the labeled feature information y from the data x to extract the unlabeled feature information z.

The generation network 15 includes a generation apparatus 16, which is a generation section that generates, from the labeled feature information y and the unlabeled feature information z, the data x including features indicated by the labeled feature information y and the unlabeled feature information z, and which corresponds to the function gθ(·) illustrated in the above Formula (5). For example, the labeled feature information y may be a 10-dimensional feature quantity, and the unlabeled feature information z may be a 50-dimensional feature quantity. In this case, a 60-dimensional feature quantity obtained by concatenating each of the feature quantities in series is input into the generation apparatus 16.

### (2) Various information

### • Data x

The data x is time-series data.

### • Labeled feature information y

The labeled feature information y is a multidimensional feature quantity indicating features of the time-series data x.

For example, the labeled feature information y may include information indicating the framework of the time-series data x. Information indicating the framework refers to information indicating the fundamental structure of the target time-series data x. In the following, information indicating the framework is also designated framework information.

In addition, the labeled feature information y may include information indicating the context of the time-series data x as a feature which can be expressed easily as a concept. Context information refers to information indicating a condition by which the target time-series data x occurs. In the following, information indicating the context is also designated context information.

### • Unlabeled feature information z

The unlabeled feature information z is a multidimensional feature quantity indicating features of the time-series data x.

### (3) Learning

The system 1 (for example, a learning section 145) learns parameters of the neural network (that is, each of the inference apparatus, the identification apparatus, and the generation apparatus). For example, the system 1 learns such that a predetermined objective function is optimized.

Herein, in a learning data set X, the labeled feature information y may be associated with the time-series data x, as in Xl={xn, yn}, or the labeled feature information y may not be associated with the time-series data x, as in Xu={xn}. In the latter case, the system 1 may estimate the labeled feature information y by the identification network 11 for association with the time-series data x. Otherwise, the association between the labeled feature information y and the time-series data x may also be performed by the user.

In addition, the system 1 may also learn the unlabeled feature information z. Learning in this case refers to inferring the unlabeled feature information z corresponding to the time-series data x by the inference network 13 after the above parameter learning. The same applies to the labeled feature information y.

The learning result may be stored in the storage section 120, for example.

### (4) Generation of time-series data

The system 1 (for example, the computation section 133) uses the neural network after the above learning to generate the time-series data x. Specifically, by inputting the labeled feature information y and the unlabeled feature information z into the generation apparatus 16, the system 1 generates time-series data x having features indicated by the labeled feature information y and the unlabeled feature information z. With this arrangement, the system 1 becomes able to generate time-series data x that reflects both difficult-to-design feature quantities and easy-to-design feature quantities.

The system 1 (for example, the acquisition section 131) may also acquire the labeled feature information y and the unlabeled feature information z used for generation. A variety of acquisition sources are conceivable, such as another apparatus (for example, the terminal apparatus 200), the storage section 120, or the like. Also, the labeled feature information y used for generation may be information output from the identification apparatus 12, and the unlabeled feature information z used for generation may be information output from the inference apparatus 14.

### (5) Process flow

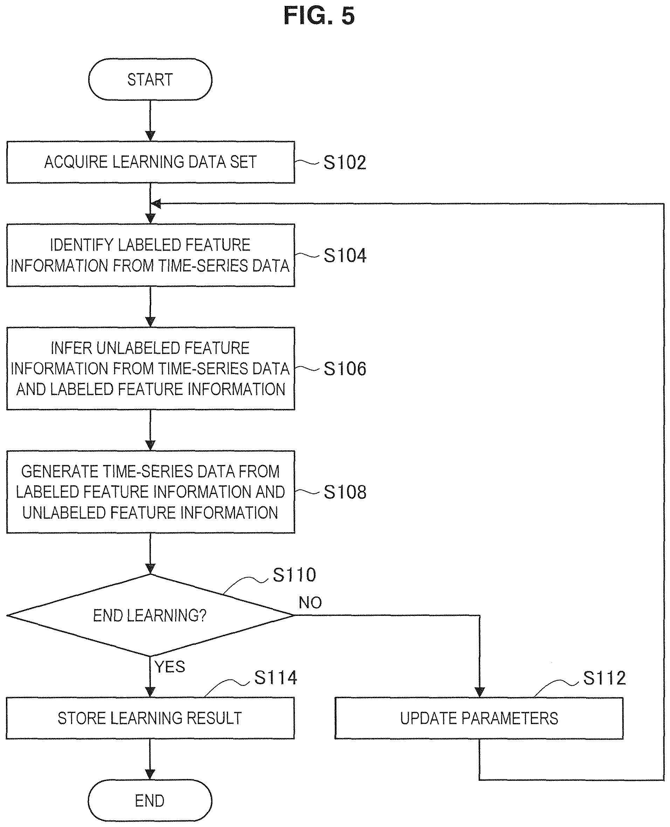

Next, an example of the flow of various processes executed by the system 1 will be described with reference to FIGS. 5 to 7.

FIG. 5 is a flowchart illustrating an example of the flow of a learning process executed in the processing apparatus 100 according to the present embodiment. As illustrated in FIG. 5, first, the acquisition section 131 acquires a learning data set (step S102). Subsequently, the learning section 135 identifies, by the identification apparatus 12, the labeled feature information y from the time-series data included in the learning data set (step S104). Next, the learning section 135 infers, by the inference apparatus 14, the unlabeled feature information z from the time-series data included in the learning data set and the labeled feature information y included in the learning data set or identified by the identification apparatus 12 (step S106). Subsequently, the learning section 135 generates, by the generation apparatus 16, the time-series data x from the labeled feature information y included in the learning data set or identified by the identification apparatus 12, and the inferred unlabeled feature information z (step S108). Next, the learning section 135 determines whether or not to end learning (step S110). For example, the learning section 135 determines to end learning in the case in which the difference between the time-series data x included in the learning data set and the generated time-series data x is a predetermined threshold value or less, and determines not to end learning in the case in which the difference exceeds the predetermined threshold value. The same applies to the labeled feature information y. In the case of determining not to end learning, the learning section 135 updates the parameters (for example, weight parameters and biases) of the neural network (the identification apparatus 12, inference apparatus 14, and/or generation apparatus 16) (step S112). After that, the process returns to step S104 again. In the case of determining to end learning, the storage section 120 stores information indicating the learning result (step S114).

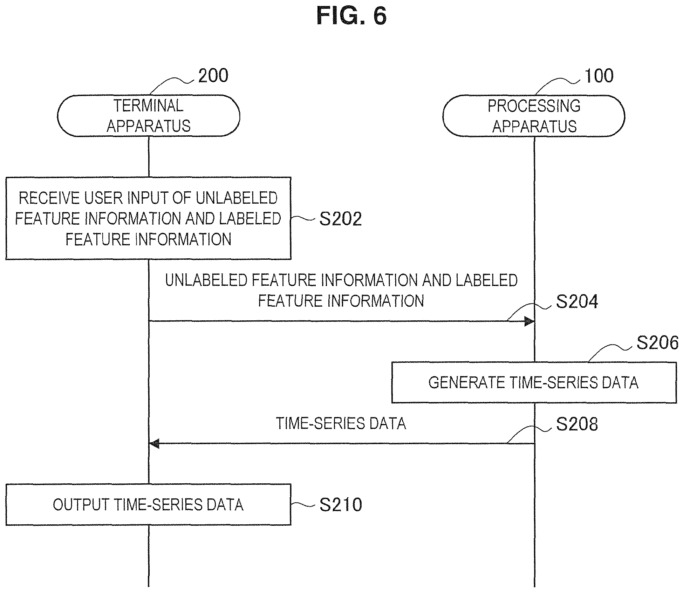

FIG. 6 is a sequence diagram illustrating an example of the flow of an interaction process executed in the system 1 according to the present embodiment. This sequence involves the processing apparatus 100 and the terminal apparatus 200. As illustrated in FIG. 6, the terminal apparatus 200 (for example, the input section 210) receives user input of the labeled feature information y and the unlabeled feature information z (step S202). Subsequently, the terminal apparatus 200 (for example, the notification section 251) notifies the processing apparatus 100 of the labeled feature information y and the unlabeled feature information z, which are acquired by the processing apparatus 100 (for example, the acquisition section 131) (step S204). Next, the processing apparatus 100 (for example, the computation section 133) generates the time-series data x using the labeled feature information y and the unlabeled feature information z from the notification (step S206). Subsequently, the processing apparatus 100 (for example, the notification section 137) notifies the terminal apparatus 200 of the generated time-series data x, which is acquired by the terminal apparatus 200 (for example, the acquisition section 253) (step S208). Additionally, the terminal apparatus 200 (for example, the output section 220) outputs the acquired time-series data x (step S210).

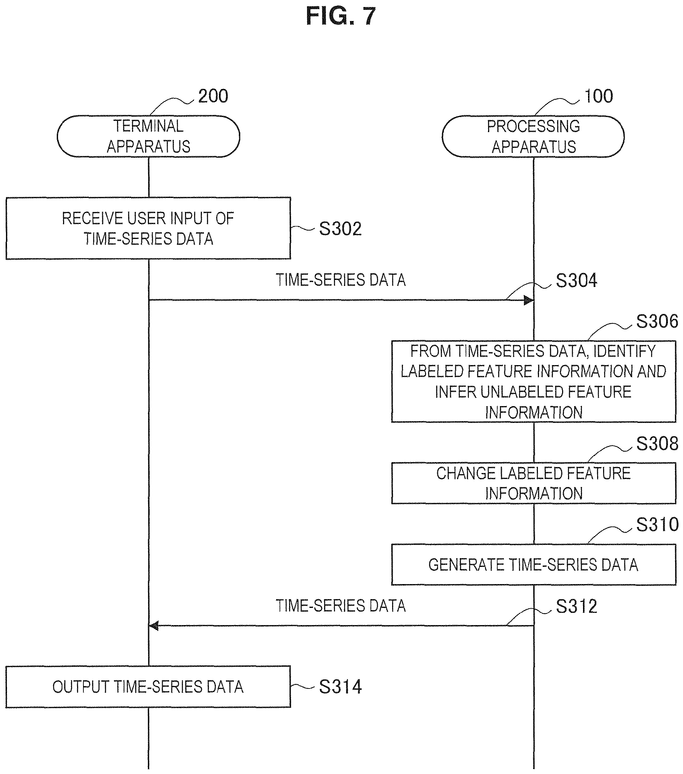

FIG. 7 is a sequence diagram illustrating an example of the flow of an interaction process executed in the system 1 according to the present embodiment. This sequence involves the processing apparatus 100 and the terminal apparatus 200. As illustrated in FIG. 7, the terminal apparatus 200 (for example, the input section 210) receives user input of the time-series data x (step S302). Subsequently, the terminal apparatus 200 (for example, the notification section 251) notifies the processing apparatus 100 of the time-series data x, which is acquired by the processing apparatus 100 (for example, the acquisition section 131) (step S304). Next, the processing apparatus 100 (for example, the computation section 133) identifies the labeled feature information y from the time-series data x, and infers the unlabeled feature information z (step S306). Subsequently, the processing apparatus 100 (for example, the computation section 133) changes the labeled feature information y in response to user input, for example (step S308), and uses the unlabeled feature information z and the changed labeled feature information y to generate the time-series data x (step S310). Next, the processing apparatus 100 (for example, the notification section 137) notifies the terminal apparatus 200 of the generated time-series data x, which is acquired by the terminal apparatus 200 (for example, the acquisition section 253) (step S312). Additionally, the terminal apparatus 200 (for example, the output section 220) outputs the acquired time-series data x (step S314).

The above describes basic technical features of the processing apparatus 100 according to the present embodiment. Next, various embodiments of the processing apparatus 100 will be described specifically.

### «4. First embodiment»

The present embodiment is an embodiment in which the time-series data x is speech data that includes a speaking voice.

### <4.1. Various data>

### • Time-series data x

The time-series data x is the speech data of reading text information aloud.

### • Labeled feature information y and unlabeled feature information z

The labeled feature information y and the unlabeled feature information z is information indicating features of the speech data x. This feature information is also collectively designated speech feature information. For example, the speech feature information expresses features related to the individuality of the speaker as typified by a voiceprint, features related to the background of the speaker, such as accent and intonation, and features of emotions or the like.

The context information among the labeled feature information y may include information indicating the context of the speaker. The context information may be, for example, information related to the speaker oneself, such as an individually identifying label, a generation (for example, child or adult), male or female, an accent (for example, the native region of the speaker), a state (for example, emotions such as happiness, anger, sorrow, and pleasure), an occupation (such as announcer, stewardess, or elevator attendant, for example), and the like. Additionally, the context information may also be information related to the environment in which the speaker speaks, such as, for example, the conversational partner (such as the speaker's child or husband, for example), the region or place where the speaker is speaking (such as a workplace, a school, or home, for example), or the like. Also, the context information may be information related to the subject about which the speaker is speaking, such as the context before and after the speech, and the topic (such as small talk or a serious discussion, for example).

Also, the framework information among the labeled feature information y is text information, such as the script of a speech or lines from a movie, for example. In this case, the framework information may be 26-dimensional information corresponding to the 26 letters of the alphabet, for example.

The unlabeled feature information z indicates features other than the labeled feature information y among the speech feature information. In the present embodiment, the unlabeled feature information z is also designated utterance style information.

### <4.2. Configuration of neural network>

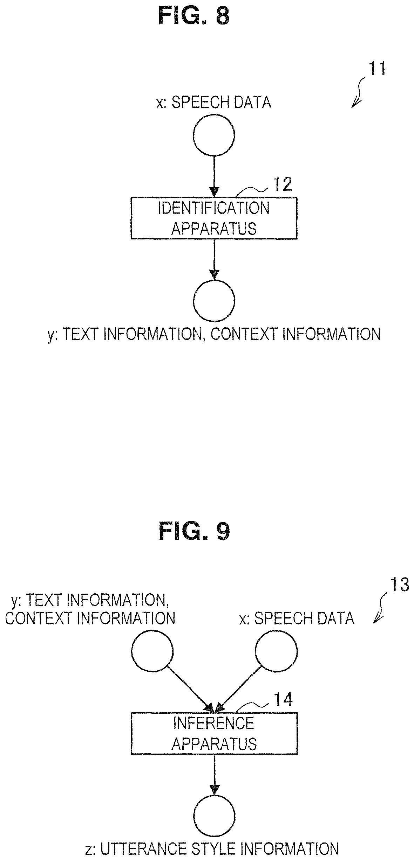

The configuration of the neural network according to the present embodiment will be described with reference to FIGS. 8 to 10.

FIG. 8 is a diagram illustrating an example of a configuration of the identification network 11 according to the present embodiment. As illustrated in FIG. 8, the identification apparatus 12 identifies text information and context information from speech data.

FIG. 9 is a diagram illustrating an example of a configuration of the inference network 13 according to the present embodiment. As illustrated in FIG. 9, the inference apparatus 14 infers utterance style information from text information, context information, and speech data.

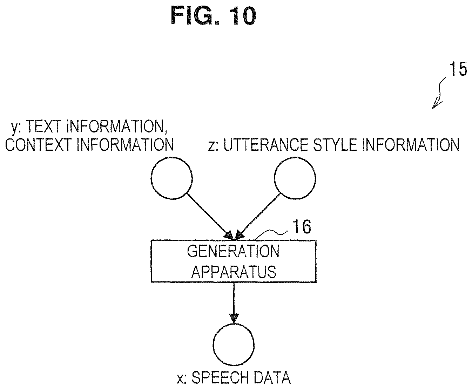

FIG. 10 is a diagram illustrating an example of a configuration of the generation network 15 according to the present embodiment. As illustrated in FIG. 9, the generation apparatus 16 generates speech data from text information, context information, and utterance style information.

### <4.3. Learning>

The system 1 (for example, a learning section 145) learns parameters of the neural network (that is, each of the inference apparatus, the identification apparatus, and the generation apparatus). For example, the system 1 learns such that a predetermined objective function is optimized.

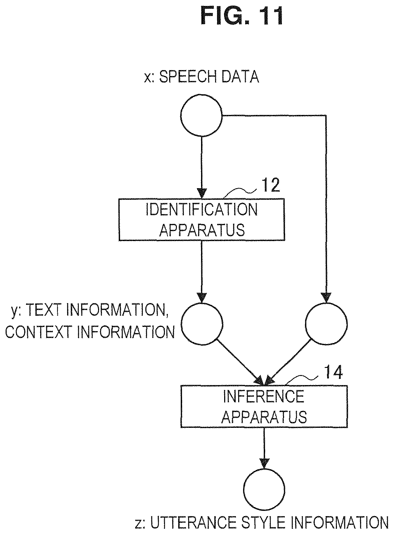

Additionally, the system 1 may also learn speech feature information. Learning in this case refers to inferring the utterance style information corresponding to the speech data by the inference apparatus 14 after the above parameter learning. Otherwise, as illustrated in FIG. 11, the system 1 may also execute learning by coupling the identification network 11 and the generation network 15 to infer the utterance style information. Note that FIG. 11 is a diagram for explaining an example of an inference process according to the present embodiment. The points of note herein are that the text information and the context information output from the identification apparatus 12 are input into the inference apparatus 14, and correspondingly, the input is speech data only. With this arrangement, the operating load on the user is reduced. The system 1 may also store learned speech feature information in association with identification information. With this arrangement, the editing of speech feature information by the selection of a speaker described later becomes possible.

### <4.4. Generation of speech data>

### (1) TTS

The system 1 (for example, the computation section 133) generates speech data from text information. For the generation of speech data from text information, text-to-speech (TTS) conversion technology is used, for example. TTS is a technology that automatically generates speech data from text, and is capable of generating speech data inexpensively compared to the case of recording speech spoken by a voice actor or the like. In a typical TTS engine, only mechanical speech is generated, and speech reflecting an accent, for example, is not generated. Accordingly, by using the generation apparatus 16 to which speech feature information is input in addition to text information instead of a TTS engine, the system 1 generates speech data reflecting an accent, for example.

The user, by inputting the desired text information to convert into speech data and the desired speech feature information into the system 1, becomes able to generate speech data in which the text information is read aloud in a voice having the desired features.

### (2) Editing of speech feature information

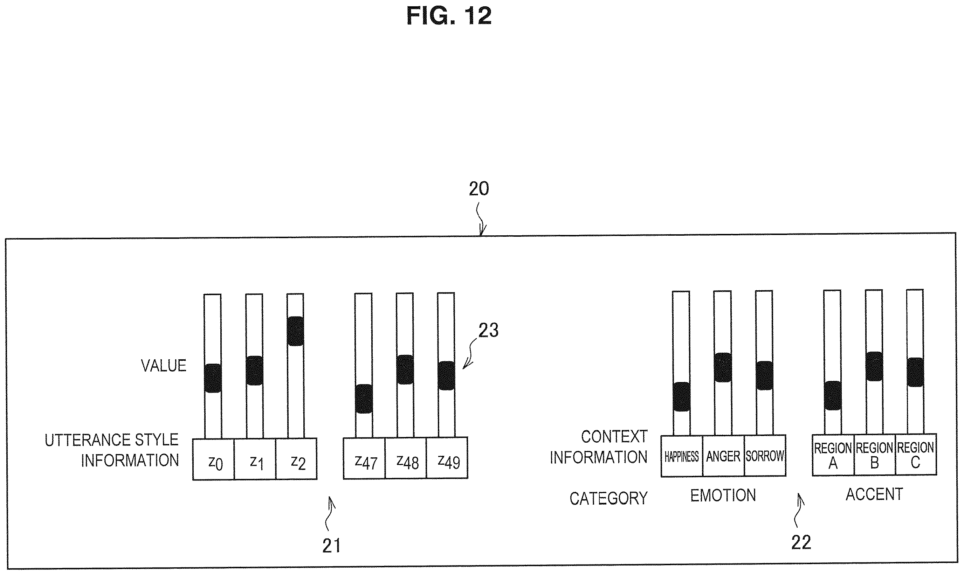

The user is able to edit speech feature information. For example, the user edits speech feature information through the terminal apparatus 200. The editing of speech feature information may be executed by a function or a command-line interface, or may be executed by a graphical interface or the like. As one example, an example of a graphical interface is illustrated in FIG. 12.

### - GUI

FIG. 12 is a diagram illustrating an example of a user interface according to the present embodiment. The speech feature information editing screen 20 illustrated in FIG. 12 is displayed by the terminal apparatus 200, for example, and receives operations for editing the speech feature information by the user. As illustrated in FIG. 12, the speech feature information editing screen 20 includes an adjustment section 21 for multidimensional feature quantities z0 to z49 which are the utterance style information, and an adjustment section 22 for multidimensional feature quantities which are the context information. Each of the multidimensional feature quantities which are the context information is associated with a label, such as "happiness", "anger", and "sorrow", as well as "region A", "region B", and "region C". The labels "happiness", "anger", and "sorrow" may be categorized as "emotions", while the labels "region A", "region B", and "region C" may be categorized as "accents". The user, by moving sliders 23 indicating the values of each of the feature quantities up and down, is able to adjust each of the feature quantities.

As illustrated in FIG. 12, by operating the adjustment section 22, the user is able to intentionally adjust the feature quantities corresponding to a concept such as emotion or accent, such that speech data having the desired features is generated. Also, by operating the adjustment section 21, the user is able to make adjustments by trial and error such that speech data having the desired features is generated. With this arrangement, the user is able to easily control the features of speech data other than the text information. From another perspective, the user becomes able to control the features of speech data with compressed information, namely, a finite amount of speech feature information, and thus the operating load is reduced.

Editing through a GUI described above enables fine-grained editing. For this reason, editing through a GUI is useful in the creation of speech content by a professional user. Examples of applied situations include the creation of scenes and lines in the process of creating animation or computer graphics (CG), and the creation of audio content after the creation of video content, for example.

### - Speaker selection

The operation of editing the speech feature information may also be executed through the selection of a speaker by the user. In this case, the operating load on the user is reduced further.

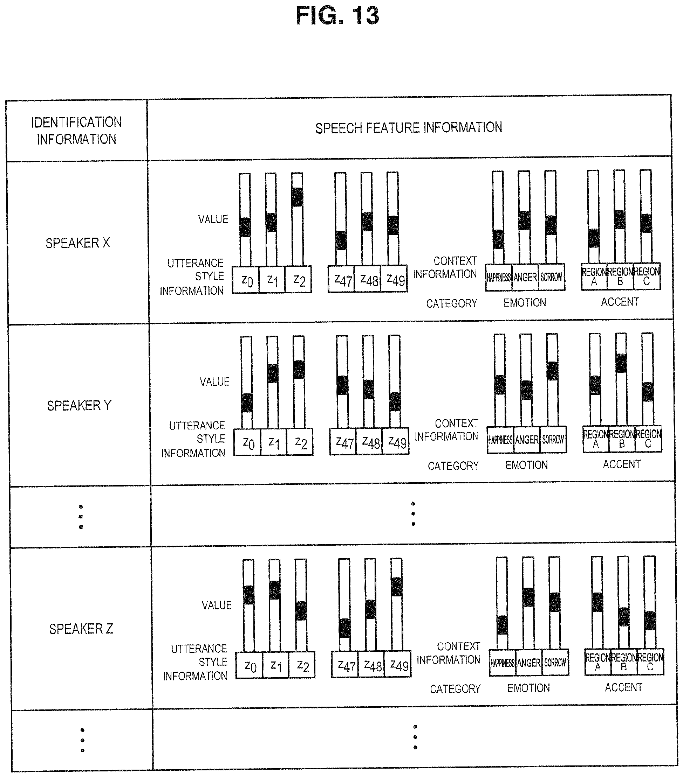

For example, the system 1 (for example, the storage section 120) stores combinations of speaker identification information and speech feature information in advance as a speech feature information DB. FIG. 13 is a diagram illustrating an example of the speech feature information DB according to the present embodiment. As illustrated in FIG. 13, the system 1 stores the identification information of each speaker in association with speech feature information. Note that the identification information of a speaker may also be taken to be the identification information of speech feature information.

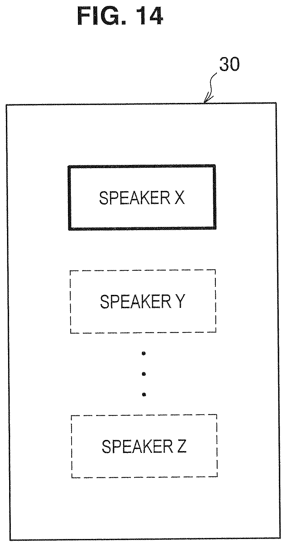

FIG. 14 is a diagram illustrating an example of a user interface according to the present embodiment. The speaker selection screen 30 illustrated in FIG. 14 is displayed by the terminal apparatus 200, for example, and receives an operation for selecting a speaker by the user. For example, suppose that the user selects "Speaker X" on the speaker selection screen 30 illustrated in FIG. 14. Then, the processing apparatus 100 (for example, the acquisition section 141) acquires the identification information of "Speaker X" (that is, the identification information of speech feature information). Subsequently, the processing apparatus 100 (for example, the computation section 133) generates speech data having the features indicated by the speech feature information corresponding to the identification information.

Note that the speaker selection options may be the names of individuals or the names of groups. As an example of the former, the speaker selection options may be persons who actually exist, for example. In this case, speech data is generated as though an actually existing person is reading text aloud. As an example of the latter, the speaker selection options may be the names of occupations, such as "announcer", "bus guide", "yakuza", "teacher", "doctor", "kabuki actor", "rakugo storyteller", and "butler". In this case, speech data of text being read aloud in a representative way of speaking for people in each occupation is generated. Similarly, the speaker selection options may be characters appearing in movies, anime, or the like. Additionally, the speaker selection options may also be races in fantasy works, such as "fairy", "yokai", and "monster", occupations in fantasy works, such as "wizard", and the like.

Note that after a speaker is selected by the speaker selection screen 30 illustrated in FIG. 14, the speech feature information may be adjusted by the speech feature information editing screen 20 illustrated in FIG. 12. For example, in the case in which the accent speech feature information is edited on the speech feature information editing screen 20, speech data may be generated as though the selected person reads text aloud in an accent different from the original person.

Editing through speaker selection described above is easy compared to editing through a GUI. For this reason, editing through speaker selection is useful for light users who, although unsatisfied with the default mechanical voice, are satisfied with a certain degree of customization. An example of an applied situation is the switching of the voice of a voice assistance agent who provides information by speech.

### - Instruction by user speech

Operations for editing speech feature information may also be executed on the basis of a result of recognizing user speech. In this case, the operating load on the user is reduced further.

For example, the context information may be edited according to an instruction by user speech. Specifically, the user edits the context information by uttering an instruction for adjusting context information. Specifically, in the case in which the user says "talk more happily", the system 1 (for example, the computation section 133) raises the value of the feature quantity corresponding to "happiness". Also, to support an editing operation indicated by the user, the system 1 may also control feature quantities that have a contrary effect on the feature quantity indicated by the user. For example, in the case in which the user says "talk more happily", the system 1 may lower the values of the feature quantities corresponding to "anger", "sorrow", and "pleasure".

Also, the user may edit speech feature information by providing feedback regarding the good and bad of the speech feature information. Specifically, the system 1 outputs speech data while changing the speech feature information at an appropriate granularity every utterance or the like, and the user provides feedback by saying "good" or "bad". Then, the system 1 controls each feature quantity to move closer to the speech feature information rated as "good" by the feedback, and move farther away from the speech feature information rated as "bad" by the feedback.

### - Automatic editing according to user speech

The editing of speech feature information may also be executed automatically according to user speech, without being executed explicitly by the user. For example, the speech feature information used in the generation of speech data may be feature information that indicates features corresponding to features of user speech. In this case, since preferred speech data is generated without having the user edit the speech feature information, the operating load on the user is reduced further.

For example, the system 1 (for example, the computation section 133) may also generate speech data by directly using speech feature information indicating the features of user speech. For this reason, the system 1 identifies or infers speech feature information (for example, context information and utterance style information) from user speech using the identification apparatus 12 and the inference apparatus 14, and generates speech data on the basis of text information for a newly required response. By such automatic editing, the system 1 becomes able to respond to user speech in an accent similar to the accent of the user, or respond to user speech at the same speed as the speed at which the user speaks.

In addition, the system 1 may also control speech feature information according to an attribute, state, or the like of the user. For example, the system 1 may generate speech data using speech feature information corresponding to the user's "sex", "age", "who the user is", "emotions", "native region", "race", "degree of concentration on the system", and the like. Note that these attributes or states may be acquired by a user database prepared in advance, or as a result of image recognition, speech recognition, and the like. By such automatic editing, the system 1 becomes able to respond slowly to children, and respond in a loud volume to the elderly, for example.

One example of an applied situation of automatic editing according to user speech is a translation situation.

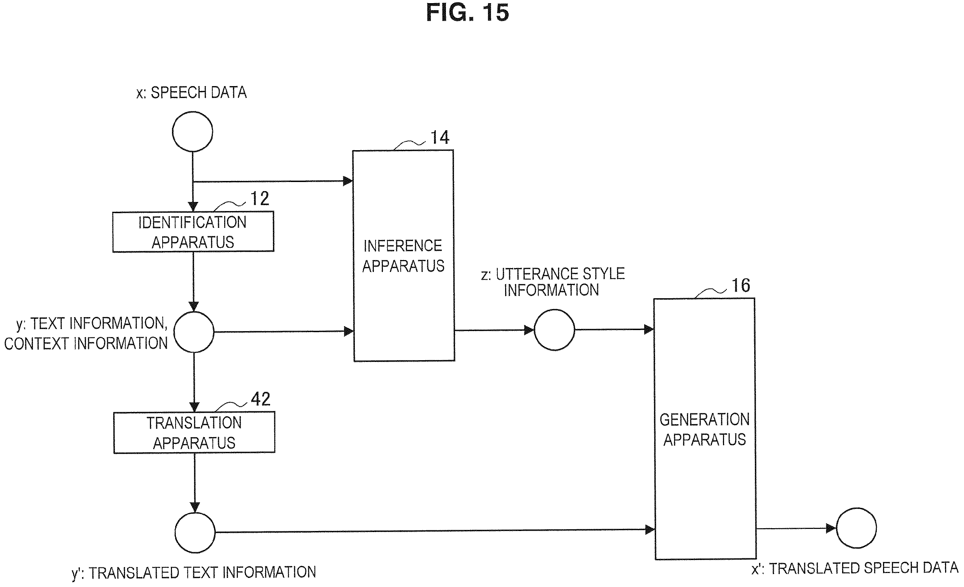

For example, the dubbing of foreign films, the simultaneous translation of speeches, and the like are ordinarily performed by a speaker who is different from the original speaker. For this reason, the nuance of the voiceprint, emotions, and the like included in the speech of the original speaker is lost from the speech of the different speaker in many cases. Regarding this point, by applying automatic editing according to user speech, the system 1 becomes able to generate speech data that translates the text included in user speech while also reflecting speech feature information similar to the user speech. Thus, in the translated speech, it becomes possible to keep the nuance of the voiceprint, emotions, and the like included in the original speech. With this arrangement, it becomes possible to satisfy the latent wants of users, such as wanting to hear the translated speech of a movie, speech, or the like in the tone of the original speaker, or wanting to realistically sense the emotions and the like of the speaker from just the speech. Hereinafter, FIG. 15 will be referenced to describe in detail a process by the processing apparatus 100 in a translation situation.

FIG. 15 is a diagram for explaining a speech data generation process in a translation situation according to the present embodiment. As illustrated in FIG. 15, the system 1 uses the identification apparatus 12, the inference apparatus 14, the generation apparatus 16, and a translation apparatus 42 to generate translated speech data from speech data. First, the system 1 (for example, the acquisition section 141) acquires speech data x to translate, segmented into appropriate segments. Subsequently, the system 1 (for example, the computation section 133) inputs the speech data x to translate into the identification apparatus 12, and estimates text information y and context information y. Note that the estimation of the text information y and the context information y may also be executed by a person or by a speech recognition apparatus or the like rather than the identification apparatus 12. Additionally, the system 1 inputs the speech x, the text information y, and the context information y into the inference apparatus 14, and estimates utterance style information z. Meanwhile, the system 1 inputs the text information y into the translation apparatus 42, and estimates text information y' in which the text information y is translated into a desired language. Note that the translation may also be executed by a person rather than the translation apparatus 42. Additionally, the system 1 inputs the translated text information y' and the utterance style information z into the generation apparatus 16, and generates translated speech data x'. At this time, obviously the system 1 may also input the context information y into the generation apparatus 16.

Note that in a translation situation, since accents tend to be different in each country, in some cases it is difficult to appropriately convert an accent in English to an accent in Japanese, for example. For this reason, the processing apparatus 100 may also remove accent feature quantities from the speech feature information input into the generation apparatus 16.

### <4.5. Supplement>

The foregoing describes an example of generating speech data by treating text information as the framework information, but the present technology is not limited to such an example.

For example, the system 1 may also treat a musical score as the framework information, and generate music data performed in accordance with the musical score. In this case, the identification apparatus 12 includes an automatic transcription function that identifies musical score information from the music data. Also, from the music data and the musical score information, the inference apparatus 14 infers, for example, music feature information indicating performer features, musical instrument features, acoustic features of the performance venue, and the like. Note that at least some of this music feature information may also be identified by the identification apparatus 12. Also, the generation apparatus 16 generates music data from the musical score information and the music feature information. With this arrangement, the system 1 becomes able to generate music data in which the musical score, performer, instrument, performance venue, and the like are altered, for example.

Specifically, regarding music data recorded in a location with unfavorable acoustics, by altering the music feature information to that of a location with favorable acoustics, it is possible to improve the acoustic state of the music data. Similarly, it also becomes possible to change the style of performance, change the song, change the singer or lyrics, and the like. Alternatively, the automatic creation of a piece of music incorporating a compositional style also becomes possible.

### <<5. Further application - not covered by the claims>>

The previously exposed techniques may be adapted to be applied to other technical domains, for example to systems in which the time-series data x is sensor data from sensing a moving body by a sensor.

### <5.1. Various data>

### • Time-series data x

The time-series data x is sensor data from sensing a moving body. Various moving bodies to be sensed, such as a human, an animal, an insect, and the like, are conceivable. The sensor that performs the sensing may be an arbitrary sensor, such as an acceleration sensor or a gyro sensor, for example. Otherwise, the sensor may also be an image sensor, and the time-series data x may be moving image data.

### • Labeled feature information y and unlabeled feature information z

The labeled feature information y and the unlabeled feature information z is information indicating features of the movement of the moving body to be sensed. This feature information is also collectively designated movement feature information. For example, the movement feature information expresses features such as a category of movement of the moving body, the magnitude of movement, and the frequency.

The context information among the labeled feature information y is information indicating a movement category of the moving body, for example. In the case in which the moving body is a human, the movement categories may be "standing", "sitting", "walking", "running", and the like, for example. Otherwise, in the case in which the moving body is an insect, the movement categories may be "flying", "calling to others", and the like. Hereinafter, the information indicating such movement categories is also designated movement category information.

The framework information among the labeled feature information y is information indicating the composition of an action of the moving body, for example. Information indicating the composition of an action is information such as walking for 10 seconds or running for 10 seconds, for example. Note that in the present embodiment, to simplify the description, a description related to the framework information is omitted.

The unlabeled feature information z indicates features other than the labeled feature information y among the movement feature information. In the present embodiment, the unlabeled feature information z is also designated movement style information.

### <5.2. Configuration of neural network>

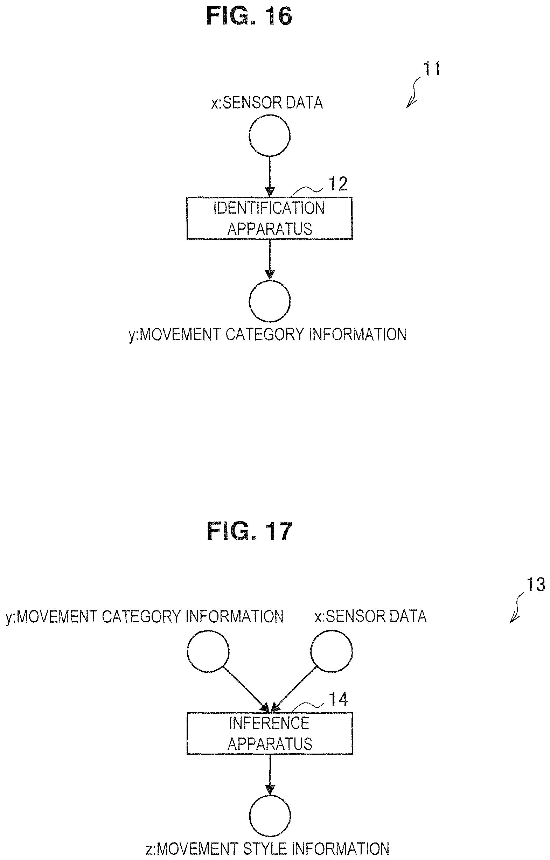

The configuration of the neural network according to the further application will be described with reference to FIGS. 16 to 18.

FIG. 16 is a diagram illustrating an example of a configuration of the identification network 11 according to the further application. As illustrated in FIG. 16, the identification apparatus 12 identifies movement category information from sensor data.

FIG. 17 is a diagram illustrating an example of a configuration of the inference network 13 according to the further application. As illustrated in FIG. 17, the inference apparatus 14 infers movement style information from movement category information and sensor data.

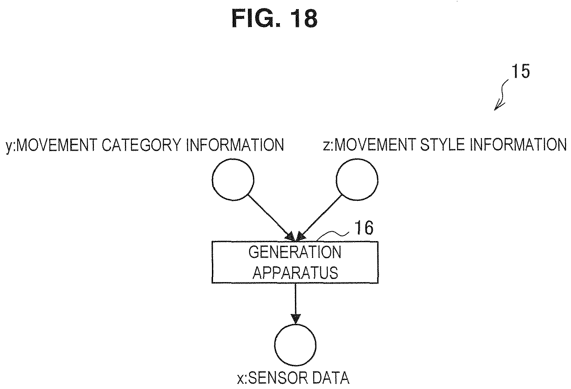

FIG. 18 is a diagram illustrating an example of a configuration of the generation network 15 according to the further application. As illustrated in FIG. 18, the generation apparatus 16 generates sensor data from movement category information and movement style information.

### <5.3. Learning>

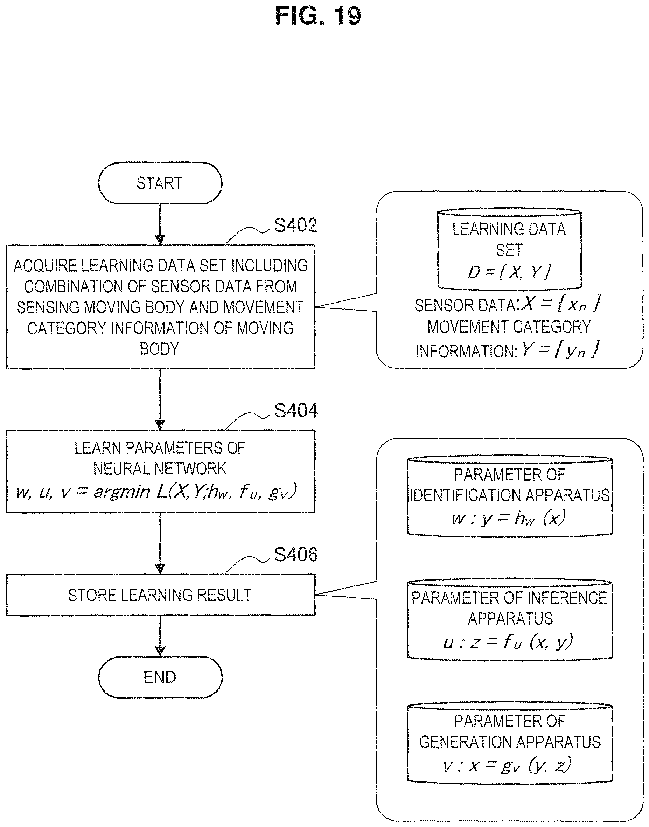

The system 1 (for example, a learning section 145) learns parameters of the neural network (that is, each of the inference apparatus, the identification apparatus, and the generation apparatus). For example, the system 1 learns such that a predetermined objective function is optimized. An example of the flow of a process related to this learning will be described with reference to FIG. 19.

FIG. 19 is a flowchart illustrating an example of the flow of a learning process executed in the processing apparatus 100 according to the further application. As illustrated in FIG. 19, first, the acquisition section 131 acquires a learning data set D={X, Y} including a combination of sensor data X={xn} from sensing a moving body and movement category information Y={yn} of the moving body (step S402). Subsequently, the learning section 135, obeying the following formula, learns the parameters of the neural network to minimize an objective function L (step S404).

[Math. 8] $w , u , v = argminL \left(X, Y, {h}_{w}, {f}_{u}, {g}_{v}\right)$

Herein, w is the parameter of the identification apparatus 12, u is the parameter of the inference apparatus 14, and v is the parameter of the generation apparatus 16. Also, the objective function L may be in the form illustrated in Formula (3) above. Additionally, the storage section 120 stores information indicating the learning result (step S406).

Also, the system 1 may learn movement feature information. Learning in this case refers to identifying or inferring the movement category information or the movement style information corresponding to the sensor data by the identification apparatus 12 or the inference apparatus 14 after the above parameter learning. The system 1 may also store learned movement feature information in association with identification information. With this arrangement, the editing of movement style information by the selection of identification information described later becomes possible.

### <5.4. Generation of sensor data>

### (1) Generation

The system 1 (for example, the computation section 133) uses the generation apparatus 16 to generate sensor data (more accurately, pseudo-sensor data) from the movement category information and the movement style information. The user, by inputting the desired movement category information and style information into the system 1, becomes able to generate desired sensor data.

### (2) Editing of movement feature information

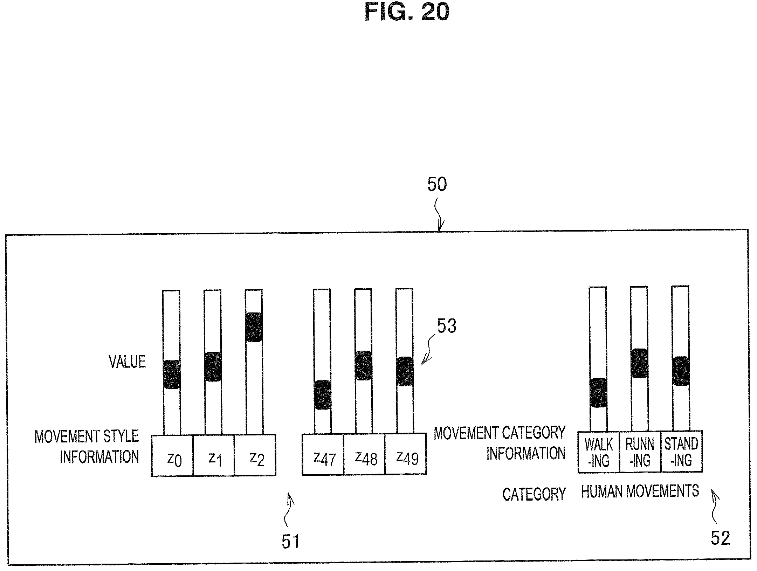

The user is able to edit movement feature information. For example, the user edits movement feature information through the terminal apparatus 200. The editing of movement feature information may be executed similarly to the editing of speech feature information described above. As an example, a description related to a GUI will be described with reference to FIG. 20, whereas a description for others will be omitted.

FIG. 20 is a diagram illustrating an example of a user interface according to the further application. The movement feature information editing screen 50 illustrated in FIG. 20 is displayed by the terminal apparatus 200, for example, and receives operations for editing the movement feature information by the user. As illustrated in FIG. 20, the movement feature information editing screen 50 includes an adjustment section 51 for multidimensional feature quantities z0 to z49 which are the movement style information, and an adjustment section 52 for multidimensional feature quantities which are the movement category information. Each of the multidimensional feature quantities which are the movement category information is associated with a label, such as "walking", "running", and "standing". The labels "walking", "running", and "standing" may be categorized as "human movements". The user, by moving sliders 53 indicating the values of each of the feature quantities up and down, is able to adjust each of the feature quantities.

### <5.5. Generation of control signal>

### (1) Overview

The moving body may also be an apparatus such as a robot, vehicle, or the like that includes actuators. In this case, the system 1 may also generate, as the time-series data x, a control signal for causing the actuators included in the moving body to operate.

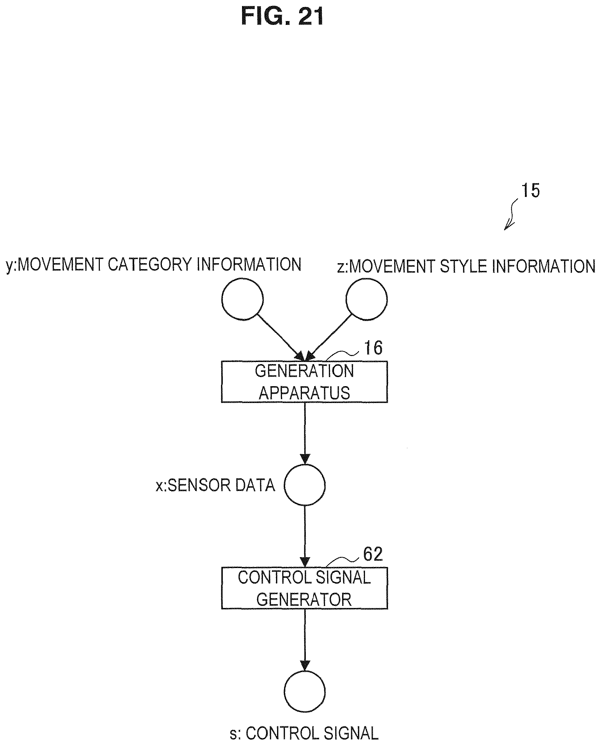

For example, the system 1 (for example, the computation section 133) generates a control signal corresponding to the sensor data. If the correspondence relationship between the control signal and the sensor data from sensing the apparatus including actuators that operate on the basis of the control signal is known, the system 1 becomes able to generate a control signal for causing the apparatus to execute a desired movement. An example of the configuration of the generation network 15 for generating such a control signal will be described with reference to FIG. 21.

FIG. 21 is a diagram illustrating an example of a configuration of the generation network 15 according to the further application. As illustrated in FIG. 21, in the generation network 15 according to the further application, a control signal generator 62 is connected to the generation apparatus 16. The control signal generator 62 includes a function of generating a corresponding control signal s from the sensor data x. Thus, the generation network 15 is able to generate the control signal s for causing the apparatus including actuators to execute a movement having the features indicating by the movement category information y and the movement style information.

### (2) Learning

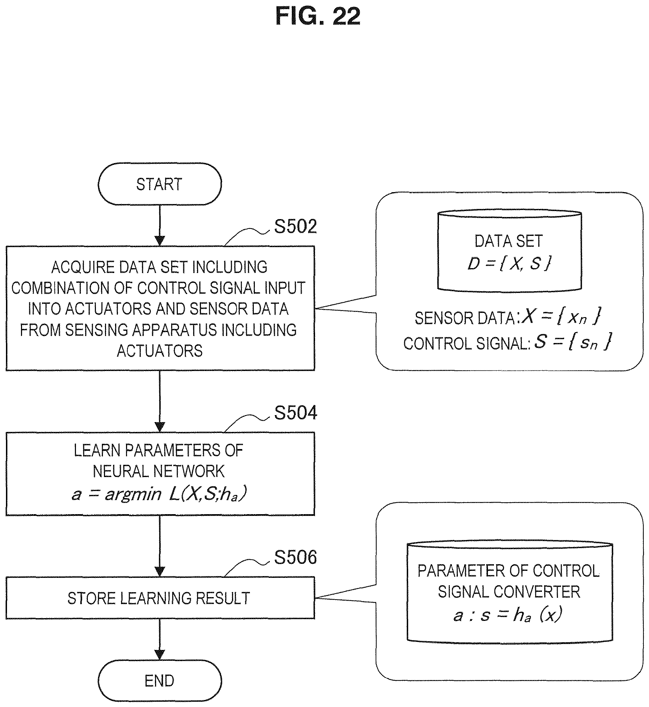

The control signal generator 62 may also include a neural network, or more specifically, a feedforward network. An example of the flow of a parameter learning process of the control signal generator 62 will be described with reference to FIG. 22.

FIG. 22 is a flowchart illustrating an example of the flow of a learning process executed in the processing apparatus 100 according to the further application. As illustrated in FIG. 22, first, the acquisition section 131 acquires a learning data set D={X, S} including a combination of a control signal S={sn} input into the actuators and sensor data X={xn} from sensing the apparatus that includes the actuators (step S502). Subsequently, the learning section 135, obeying the following formula, learns the parameters of the neural network to minimize an objective function L (step S504).

[Math. 9] $a = argminL \left(X, S, {h}_{a}\right)$

Herein, a is the parameter of the control signal generator 62. Also, the objective function L may be in the form illustrated in Formula (3) above. Additionally, the storage section 120 stores information indicating the learning result (step S506).

Note that the control signal generator 62 and the other neural networks (for example, the identification apparatus 12, inference apparatus 14, and/or generation apparatus 16) may execute learning individually or collectively.

### (3) Generation

The system 1 (for example, the computation section 133) uses the generation apparatus 16 and the control signal generator 62 to generate a control signal from the movement category information and the movement style information. The user, by inputting the desired movement category information and style information into the system 1, becomes able to generate a control signal for causing the apparatus including the actuators to execute a desired movement.

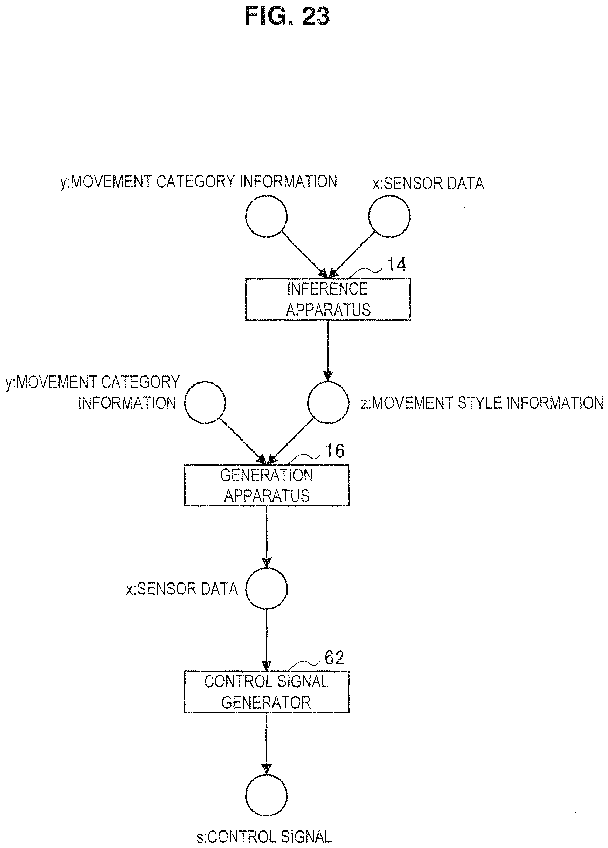

The system 1 may generate the control signal by using the generation network 15 illustrated in FIG. 21, or may generate the control signal by combining the generation network 15 with other components. Examples of the above will be described with reference to FIGS. 23 to 25.

FIG. 23 is a diagram for explaining an example of a control signal generation process according to the further application. As illustrated in FIG. 23, the system 1 may generate the control signal by combining the generation network 15 described with reference to FIG. 21 with the inference network 13 described with reference to FIG. 17. According to the configuration illustrated in FIG. 23, the inference apparatus 14 infers the movement style information of the moving body to be sensed, and inputs into the generation apparatus 16. Subsequently, the generation apparatus 16 generates sensor data, and the control signal generator 62 generates the control signal. The moving body to be sensed may also not be an apparatus that includes actuators, such as a human, for example. In this case, the system 1 becomes able to cause, for example, a humanoid robot to execute a movement similar to a human, on the basis of sensor data from sensing a human.

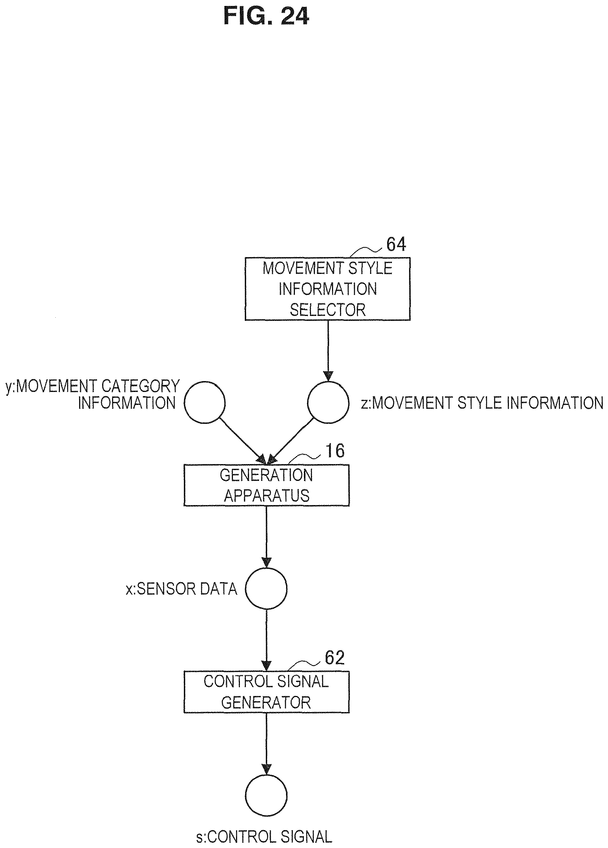

FIG. 24 is a diagram for explaining an example of a control signal generation process according to the further application. As illustrated in FIG. 24, the system 1 may generate the control signal by combining the generation network 15 described with reference to FIG. 21 with a movement style information selector 64. The movement style information selector 64 includes a function of outputting movement style information corresponding to identification information selected by the user, for example. Associations between identification information and movement style information are made by the learning described above.

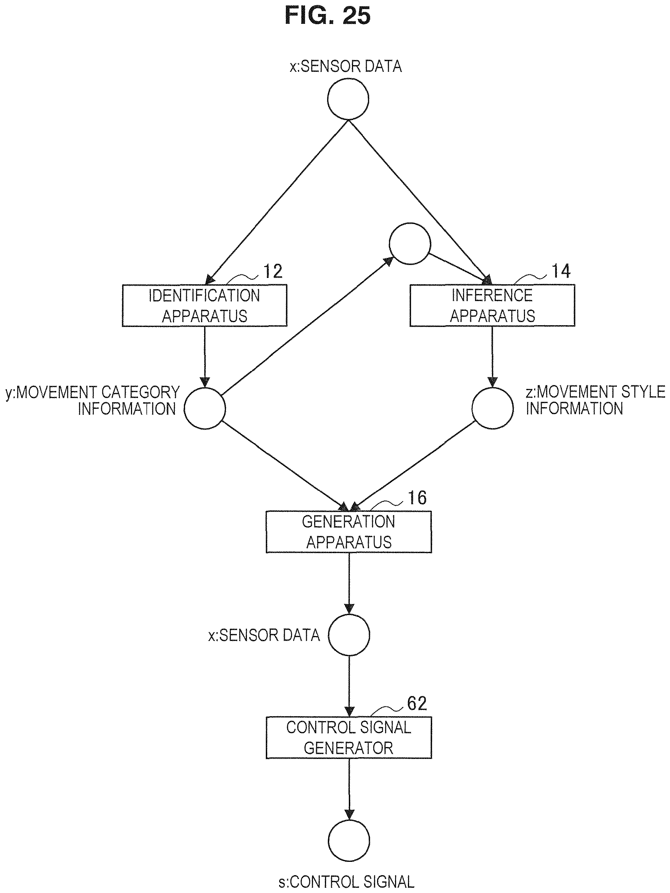

FIG. 25 is a diagram for explaining an example of a control signal generation process according to the further application. As illustrated in FIG. 25, the system 1 may generate the control signal by combining the generation network 15 described with reference to FIG. 21 with the identification network 11 described with reference to FIG. 16 and the inference network 13 described with reference to FIG. 17. The points of note herein are that the movement category information y output from the identification apparatus 12 are input into the inference apparatus 14, and correspondingly, the input is the sensor data x only. With this arrangement, the operating load on the user is reduced.

### «6. Supplement»

As described above, in one embodiment of the present disclosure, time-series data x is generated from labeled feature information y and unlabeled feature information z. The time-series data x, the labeled feature information y, and the unlabeled feature information z are not limited to the examples described above, and a variety of such information is conceivable.

For example, the labeled feature information y may be a musical score, the unlabeled feature information z may be musical performance features and singing features, and the time-series data x may be singing data. In this case, the system 1 becomes able to learn musical performance features and singing features from a data set that includes multiple combinations of musical scores including lyrics and singing data of a certain artist, and generate singing data corresponding to the musical score of a different artist, as though the certain artist were singing.

For example, the labeled feature information y may be the plot of a novel, the unlabeled feature information z may be writer features (for example, literary style), and the time-series data x may be a novel. In this case, the system 1 becomes able to learn writer features from a data set that includes multiple combinations of plots and novels of a certain writer, and generate a novel corresponding to a newly input plot, as though the certain writer had written the novel.

For example, the labeled feature information y may be the text information of a first language, the unlabeled feature information z may be language features, and the time-series data x may be second text information. In this case, the system 1 becomes able to learn language features using a bilingual corpus (that is, a data set) that includes Japanese text and English text, and convert newly input Japanese text into English text for output.

For example, the labeled feature information y may be the plot of a picture, the unlabeled feature information z may be artist features, and the time-series data x may be the stroke order of a picture. In this case, the system 1 becomes able to learn artist features from a data set that includes multiple combinations between plots of pictures, such as "many sunflowers underneath a blue sky", and the stroke orders of pictures based on such plots, and generate a stroke order of a picture with respect to a newly input plot of a picture.

### «7. Hardware configuration example»

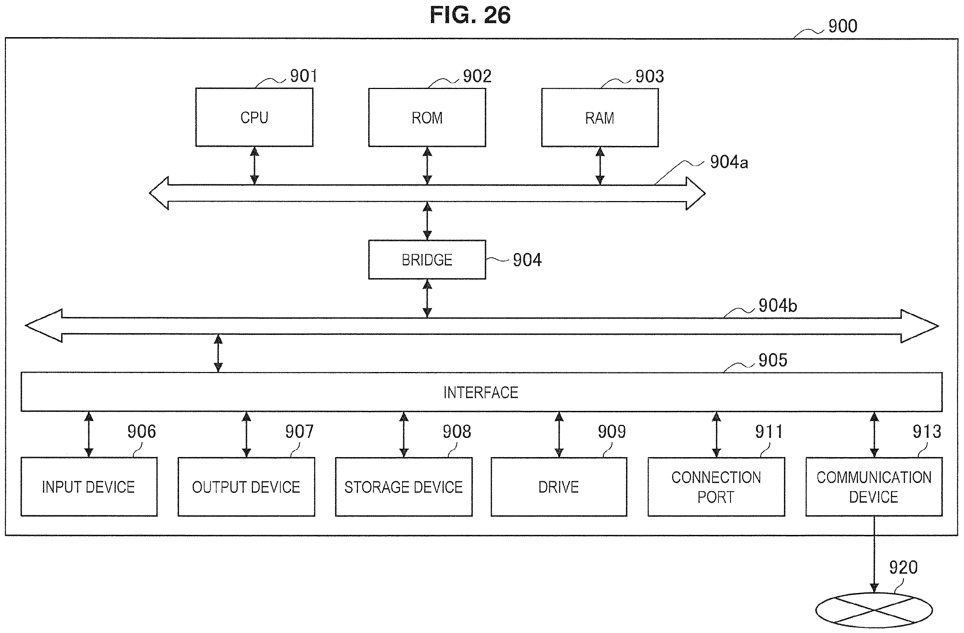

Finally, a hardware configuration of an information processing apparatus according to the present embodiment will be described with reference to FIG. 26. FIG. 26 is a block diagram illustrating an example of the hardware configuration of the information processing apparatus according to the present embodiment. Meanwhile, the information processing apparatus 900 illustrated in FIG. 26 may realize the information processing apparatus 100 or the terminal apparatus 200 illustrated in each of FIGS. 2 and 3, for example. Information processing by the information processing apparatus 100 or the terminal apparatus 200 according to the present embodiment is realized according to cooperation between software and hardware described below.

As illustrated in FIG. 26, the information processing apparatus 900 includes a central processing unit (CPU) 901, a read only memory (ROM) 902, a random access memory (RAM) 903 and a host bus 904a. In addition, the information processing apparatus 900 includes a bridge 904, an external bus 904b, an interface 905, an input device 906, an output device 907, a storage device 908, a drive 909, a connection port 911 and a communication device 913. The information processing apparatus 900 may include a processing circuit such as a DSP or an ASIC instead of the CPU 901 or along therewith.

The CPU 901 functions as an arithmetic processing device and a control device and controls the overall operation in the information processing apparatus 900 according to various programs. Further, the CPU 901 may be a microprocessor. The ROM 902 stores programs, operation parameters and the like used by the CPU 901. The RAM 903 temporarily stores programs used in execution of the CPU 901, parameters appropriately changed in the execution, and the like. The CPU 901 can form the control section 130 illustrated in FIG. 2 or the control section 250 illustrated in FIG. 3, for example.

The CPU 901, the ROM 902 and the RAM 903 are connected by the host bus 904a including a CPU bus and the like. The host bus 904a is connected with the external bus 904b such as a peripheral component interconnect/interface (PCI) bus via the bridge 904. Further, the host bus 904a, the bridge 904 and the external bus 904b are not necessarily separately configured and such functions may be mounted in a single bus.

The input device 906 is realized by a device through which a user inputs information, such as a mouse, a keyboard, a touch panel, a button, a microphone, a switch, and a lever. In addition, the input device 906 may be a remote control device using infrared ray or other electric waves or external connection equipment such as a cellular phone or a PDA corresponding to operation of the information processing apparatus 900, for example. Furthermore, the input device 906 may include an input control circuit or the like which generates an input signal on the basis of information input by the user using the aforementioned input means and outputs the input signal to the CPU 901, for example. The user of the information processing apparatus 900 may input various types of data or order a processing operation for the information processing apparatus 900 by operating the input device 906.

In addition to the above, the input device 906 can be formed by a device that detects information related to the user. For example, the input device 906 can include various sensors such as an image sensor (a camera, for example), a depth sensor (a stereo camera, for example), an acceleration sensor, a gyro sensor, a geomagnetic sensor, an optical sensor, a sound sensor, a distance measurement sensor, and a force sensor. Also, the input device 906 may acquire information related to the state of the information processing apparatus 900 itself such as the posture and the moving velocity of the information processing apparatus 900 and information related to a surrounding environment of the information processing apparatus 900 such as brightness or noise around the information processing apparatus 900. Also, the input device 906 may include a GNSS module that receives a GNSS signal (a GPS signal from a global positioning system (GPS) satellite, for example) from a global navigation satellite system (GNSS) satellite and measures position information including the latitude, the longitude, and the altitude of the device. In addition, the input device 906 may detect the position through Wi-Fi (registered trademark), transmission and reception to and from a mobile phone, a PHS, a smartphone, or the like, near-field communication, or the like, in relation to the position information. The input device 906 can form the input section 210 illustrated in FIG. 3, for example.

The output device 907 is formed by a device that may visually or aurally notify the user of acquired information. As such devices, there is a display device such as a CRT display device, a liquid crystal display device, a plasma display device, an EL display device, a laser projector, an LED projector or a lamp, a sound output device such as a speaker and a headphone, a printer device and the like. The output device 907 outputs results acquired through various processes performed by the information processing apparatus 900, for example. Specifically, the display device visually displays results acquired through various processes performed by the information processing apparatus 900 in various forms such as text, images, tables and graphs. On the other hand, the sound output device converts audio signals including reproduced sound data, audio data and the like into analog signals and aurally outputs the analog signals. The aforementioned display device or the aforementioned sound output device may form the output section 220 illustrated in FIG. 3, for example.

The storage device 908 is a device for data storage, formed as an example of a storage section of the information processing apparatus 900. For example, the storage device 908 is realized by a magnetic storage device such as an HDD, a semiconductor storage device, an optical storage device, a magneto-optical storage device or the like. The storage device 908 may include a storage medium, a recording device for recording data on the storage medium, a reading device for reading data from the storage medium, a deletion device for deleting data recorded on the storage medium and the like. The storage device 908 stores programs and various types of data executed by the CPU 901, various types of data acquired from the outside and the like. The storage device 908 may form the storage section 120 illustrated in FIG. 2 or the storage section 240 illustrated in FIG. 3, for example.

The drive 909 is a reader/writer for storage media and is included in or externally attached to the information processing apparatus 900. The drive 909 reads information recorded on a removable storage medium such as a magnetic disc, an optical disc, a magneto-optical disc or a semiconductor memory mounted thereon and outputs the information to the RAM 903. In addition, the drive 909 can write information on the removable storage medium.

The connection port 911 is an interface connected with external equipment and is a connector to the external equipment through which data may be transmitted through a universal serial bus (USB) and the like, for example.

The communication device 913 is a communication interface formed by a communication device for connection to a network 920 or the like, for example. The communication device 913 is a communication card or the like for a wired or wireless local area network (LAN), long term evolution (LTE), Bluetooth (registered trademark) or wireless USB (WUSB), for example. In addition, the communication device 913 may be a router for optical communication, a router for asymmetric digital subscriber line (ADSL), various communication modems or the like. For example, the communication device 913 may transmit/receive signals and the like to/from the Internet and other communication apparatuses according to a predetermined protocol, for example, TCP/IP or the like. The communication device 913 may form the communication section 110 illustrated in FIG. 2 or the communication section 230 illustrated in FIG. 3, for example.

Further, the network 920 is a wired or wireless transmission path of information transmitted from devices connected to the network 920. For example, the network 920 may include a public circuit network such as the Internet, a telephone circuit network or a satellite communication network, various local area networks (LANs) including Ethernet (registered trademark), a wide area network (WAN) and the like. In addition, the network 920 may include a dedicated circuit network such as an internet protocol-virtual private network (IP-VPN).

Hereinbefore, an example of a hardware configuration capable of realizing the functions of the information processing apparatus 900 according to this embodiment is shown. The respective components may be implemented using universal members, or may be implemented by hardware specific to the functions of the respective components. Accordingly, according to a technical level at the time when the embodiments are executed, it is possible to appropriately change hardware configurations to be used.

In addition, a computer program for realizing each of the functions of the information processing apparatus 900 according to the present embodiment as described above may be created, and may be mounted in a PC or the like. Furthermore, a computer-readable recording medium on which such a computer program is stored may be provided. The recording medium is a magnetic disc, an optical disc, a magneto-optical disc, a flash memory, or the like, for example. Further, the computer program may be delivered through a network, for example, without using the recording medium.

### «8. Conclusion»

The above describes an embodiment of the invention in detail, with reference to FIGS. 1 to 15, and a further application with reference to FIGS. 16-26. . As described above, the system 1 according to the present embodiment acquires first feature information to which meaning is assigned (that is, labeled feature information) and second feature information to which meaning is not assigned (that is, unlabeled feature information), and generates time-series data having features indicated by the labeled feature information and the unlabeled feature information. With this arrangement, characterizing data appropriately becomes possible. More specifically, a user is able to select or edit the labeled feature information and the unlabeled feature information to match desired features, and thereby easily generate time-series data having the desired features.

The preferred embodiment of the invention has been described above with reference to the accompanying drawings, whilst the present disclosure is not limited to the above examples. A person skilled in the art may find various alterations and modifications within the scope of the appended claims.

For example, in the foregoing embodiments, the processing apparatus 100 and the terminal apparatus 200 are described as individual apparatus, but the present technology is not limited to such an example. For example, the processing apparatus 100 and the terminal apparatus 200 may also be realized as a single apparatus.

Note that it is not necessary for the processing described in this specification with reference to the flowchart and the sequence diagram to be executed in the order shown in the flowchart. Some processing steps may be performed in parallel. Further, some of additional steps can be adopted, or some processing steps can be omitted.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 1: system
- 11: identification network
- 12: identification apparatus
- 13: inference network
- 14: inference apparatus
- 15: generation network
- 16: generation apparatus
- 42: translation apparatus
- 62: control signal generator
- 64: movement style information selector
- 100: processing apparatus
- 110: communication section
- 120: storage section
- 130: control section
- 131: acquisition section
- 133: computation section
- 135: learning section
- 137: notification section
- 200: terminal apparatus
- 210: input section
- 220: output section
- 230: communication section
- 240: storage section
- 250: control section
- 251: notification section
- 253: acquisition section

## Claims

1. An information processing system (1) **characterized by**:
an information processing apparatus (100); and
a terminal apparatus (200) comprising:
a notification section (251) configured to notify the information processing apparatus (100) of a learning data set, wherein the learning data set includes input time-series data associated with a first feature information, to which a label is assigned, and a second feature information, to which no label is assigned; and
an acquisition section (253) configured to acquire, from the information processing apparatus (100), generated time-series speech data having features indicated by the first feature information and the second feature information, wherein
the information processing apparatus (100) comprises:
an acquisition section (131) configured to acquire the learning data set from the terminal apparatus (200);
an identification section configured to identify the first feature information from the input time-series data with a neural network;
an inference section configured to infer the second feature information from the input time-series data and the first feature information with the neural network;
a learning section (135) configured to learn a parameter of the neural network; and
a generation section (133) configured to generate the generated time-series data having features indicated by the first feature information and the second feature information, the first feature information and the second feature information being acquired by the acquisition section (131), wherein
the generation section (133) is configured to generate the generated time-series speech data with the neural network;
wherein the input time-series data are user speech data, and the first feature information and the second feature information are information indicating features of the speech data, and
wherein the information processing apparatus (100) and the terminal apparatus (200) are connected by a network (300).

2. The information processing system (1) according to claim 1, wherein
the first feature information includes information indicating a context of the input time-series data.

3. The information processing system (1) according to claim 2, wherein
the first feature information includes information indicating a framework of the input time-series data.

4. The information processing system (1) according to claim 3, wherein
the information indicating the framework is text information, and
the input time-series data is speech data of reading the text information aloud.

5. The information processing system (1) according to claim 4, wherein
the information indicating the context includes information related to a speaker oneself, or information related to an environment in which a speaker speaks, or information related to a subject about which a speaker speaks.

6. The information processing system (1) according to claim 1, wherein
the first feature information is edited in accordance with an instruction by user speech.

7. The information processing system (1) according to claim 1, wherein
the acquisition section (131) is configured to acquire identification information of a speaker corresponding to the first feature information and the second feature information, and
the generation section (133) is configured to generate the generated time-series data having features corresponding to the identification information.

8. An information processing method for an information processing system (1) comprising an information processing apparatus (100) and a terminal apparatus (200), the method being **characterized by**:
notifying, by the terminal apparatus (200), the information processing apparatus (100) of a learning data set, wherein the learning data set includes input time-series data associated with a first feature information, to which a label is assigned, and a second feature information, to which no label is assigned;
acquiring, by the information processing apparatus (100), the learning data set;
identifying, by the processor of the information processing apparatus (100), the first feature information from the input time-series data with a neural network;
inferring, by the processor of the information processing apparatus (100), the second feature information from the input time series data and the first feature information with the neural network;
learning, by the processor of the information processing apparatus (100), a parameter of the neural network;
generating, by a processor of the information processing apparatus (100), generated time-series speech data having features indicated by the acquired first feature information and second feature information, wherein the generated time-series speech data is generated with the neural network; and
acquiring, by a processor of the terminal apparatus (200), the generated time-series speech data having features indicated by the first feature information and the second feature information, from the information processing apparatus (100);
wherein the input time-series data are user speech data, and the first feature information and the second feature information are information indicating features of the speech data, and
wherein the information processing apparatus (100) and the terminal apparatus (200) are connected by a network (300).

## Patentansprüche

1. Informationsverarbeitungssystem (1), **gekennzeichnet durch**:
eine Informationsverarbeitungsvorrichtung (100); und
eine Endgerätevorrichtung (200), die Folgendes umfasst:
eine Benachrichtigungssektion (251), ausgelegt zum Benachrichtigen der Informationsverarbeitungsvorrichtung (100) über einen Lerndatensatz, wobei der Lerndatensatz Eingabezeitreihendaten, die mit ersten Merkmalsinformationen assoziiert sind, denen eine Kennzeichnung zugewiesen ist, und zweite Merkmalsinformationen, denen keine Kennzeichnung zugewiesen ist, beinhaltet; und
eine Erfassungssektion (253), ausgelegt zum Erfassen, von der Informationsverarbeitungsvorrichtung (100), von erzeugten Zeitreihensprachdaten, die Merkmale aufweisen, die **durch** die ersten Merkmalsinformationen und die zweiten
Merkmalsinformationen angegeben werden, wobei die Informationsverarbeitungsvorrichtung (100) Folgendes umfasst:
eine Erfassungssektion (131), ausgelegt zum Erfassen des Lerndatensatzes von der Endgerätevorrichtung (200);
eine Identifikationssektion, ausgelegt zum Identifizieren der ersten Merkmalsinformationen aus den Eingabezeitreihendaten mit einem neuronalen Netz;
eine Ableitungssektion, ausgelegt zum Ableiten der zweiten Merkmalsinformationen aus den Eingabezeitreihendaten und den ersten Merkmalsinformationen mit dem neuronalen Netz;
eine Lernsektion (135), ausgelegt zum Lernen eines Parameters des neuronalen Netzes; und
eine Erzeugungssektion (133), ausgelegt zum Erzeugen der erzeugten Zeitreihendaten, die Merkmale aufweisen, die **durch** die ersten Merkmalsinformationen und die zweiten Merkmalsinformationen angegeben werden, wobei die ersten Merkmalsinformationen und die zweiten Merkmalsinformationen **durch** die Erfassungssektion (131) erfasst werden, wobei
die Erzeugungssektion (133) ausgelegt ist zum Erzeugen der erzeugten Zeitreihensprachdaten mit dem neuronalen Netz;
wobei die Eingabezeitreihendaten Benutzersprachdaten sind und die ersten Merkmalsinformationen und die zweiten Merkmalsinformationen Informationen sind, die Merkmale der Sprachdaten angeben, und
wobei die Informationsverarbeitungsvorrichtung (100) und die Endgerätevorrichtung (200) **durch** ein Netz (300) verbunden sind.

2. Informationsverarbeitungssystem (1) nach Anspruch 1, wobei
die ersten Merkmalsinformationen Informationen beinhalten, die einen Kontext der Eingabezeitreihendaten angeben.

3. Informationsverarbeitungssystem (1) nach Anspruch 2, wobei
die ersten Merkmalsinformationen eine Gefügestruktur der Eingabezeitreihendaten angeben.

4. Informationsverarbeitungssystem (1) nach Anspruch 3, wobei
die Informationen, die die Gefügestruktur angeben, Textinformationen sind, und
die Eingabezeitreihendaten Sprachdaten vom lauten Lesen der Textinformationen sind.

5. Informationsverarbeitungssystem (1) nach Anspruch 4, wobei
die Informationen, die den Kontext angeben, Informationen beinhaltet, die sich auf einen Sprecher selbst beziehen, oder Informationen, die sich auf eine Umgebung beziehen, in der ein Sprecher spricht, oder Informationen, die sich auf ein Thema beziehen, über welches der Sprecher spricht.

6. Informationsverarbeitungssystem (1) nach Anspruch 1, wobei
die ersten Merkmalsinformationen gemäß einer Anweisung durch Sprache eines Benutzers editiert werden.

7. Informationsverarbeitungssystem (1) nach Anspruch 1, wobei
die Erfassungssektion (131) ausgelegt ist zum Erfassen von Identifikationsinformationen über einen Sprecher, entsprechend den ersten Merkmalsinformationen und den zweiten Merkmalsinformationen, und
die Erzeugungssektion (133) ausgelegt ist zum Erzeugen der erzeugten Zeitreihendaten, die Merkmale aufweisen, die den Identifikationsinformationen entsprechen.

8. Informationsverarbeitungsverfahren für ein Informationsverarbeitungssystem (1), umfassend eine Informationsverarbeitungsvorrichtung (100) und eine Endgerätevorrichtung (200), wobei das Verfahren **gekennzeichnet ist durch**:
Benachrichtigen, **durch** die Endgerätevorrichtung (200), der Informationsverarbeitungsvorrichtung (100) über einen Lerndatensatz, wobei der Lerndatensatz Eingabezeitreihendaten, die mit ersten Merkmalsinformationen assoziiert sind, denen eine Kennzeichnung zugewiesen ist, und zweite Merkmalsinformationen, denen keine Kennzeichnung zugewiesen ist, beinhaltet;
Erfassen, **durch** die Informationsverarbeitungsvorrichtung (100), des Lerndatensatzes;
Identifizieren, **durch** den Prozessor der Informationsverarbeitungsvorrichtung (100), der ersten Merkmalsinformationen aus den Eingabezeitreihendaten mit einem neuronalen Netz;
Ableiten, **durch** den Prozessor der Informationsverarbeitungsvorrichtung (100), der zweiten Merkmalsinformationen aus den Eingabezeitreihendaten und den ersten Merkmalsinformationen mit dem neuronalen Netz;
Lernen, **durch** den Prozessor der Informationsverarbeitungsvorrichtung (100), eines Parameters des neuronalen Netzes;
Erzeugen, **durch** einen Prozessor der Informationsverarbeitungsvorrichtung (100) von erzeugten Zeitreihensprachdaten, die Merkmale aufweisen, die **durch** die erfassten ersten Merkmalsinformationen und zweiten Merkmalsinformationen angegeben werden, wobei die erzeugten Zeitreihensprachdaten **durch** das neuronale Netz erzeugt werden; und
Erfassen, **durch** einen Prozessor der Endgerätevorrichtung (200), der erzeugten Zeitreihensprachdaten, die Merkmale aufweisen, die durch die ersten Merkmalsinformationen und die zweiten Merkmalsinformationen angegeben werden, von der Informationsverarbeitungsvorrichtung (100);
wobei die Eingabezeitreihendaten Benutzersprachdaten sind und die ersten Merkmalsinformationen und die zweiten Merkmalsinformationen Informationen sind, die Merkmale der Sprachdaten angeben, und
wobei die Informationsverarbeitungsvorrichtung (100) und die Endgerätevorrichtung (200) **durch** ein Netz (300) verbunden sind.

## Revendications

1. Système de traitement d'informations (1) comprenant :
un appareil de traitement d'informations (100) ; et
un appareil terminal (200) comprenant :
une section de notification (251) configurée pour notifier à l'appareil de traitement d'informations (100) un ensemble de données d'apprentissage, l'ensemble de données d'apprentissage comportant des données de série chronologique d'entrée associées à des premières informations de caractéristiques, auxquelles une étiquette est attribuée, et à des secondes informations de caractéristiques, auxquelles aucune étiquette n'est attribuée ; et
une section d'acquisition (253) configurée pour acquérir, auprès de l'appareil de traitement d'informations (100), des données vocales de série chronologique générées présentant des caractéristiques indiquées par les premières informations de caractéristiques et les secondes informations de caractéristiques, dans lequel
l'appareil de traitement d'informations (100) comprend :
une section d'acquisition (131) configurée pour acquérir l'ensemble de données d'apprentissage auprès de l'appareil terminal (200) ;
une section d'identification configurée pour identifier les premières informations de caractéristiques à partir des données de série chronologique d'entrée avec un réseau neuronal ;
une section d'inférence configurée pour inférer les secondes informations de caractéristiques à partir des données de série chronologique d'entrée et des premières informations de caractéristiques avec le réseau neuronal ;
une section d'apprentissage (135) configurée pour apprendre un paramètre du réseau neuronal ; et
une section de génération (133) configurée pour générer les données de série chronologique générées présentant des caractéristiques indiquées par les premières informations de caractéristiques et les secondes informations de caractéristiques, les premières informations de caractéristiques et les secondes informations de caractéristiques étant acquises par la section d'acquisition (131), dans lequel
la section de génération (133) est configurée pour générer les données vocales de série chronologique générées avec le réseau neuronal ;
dans lequel les données de série chronologique d'entrée sont des données vocales d'utilisateur, et les premières informations de caractéristiques et les secondes informations de caractéristiques sont des informations indiquant des caractéristiques des données vocales, et
dans lequel l'appareil de traitement d'informations (100) et l'appareil terminal (200) sont connectés par un réseau (300).

2. Système de traitement d'informations (1) selon la revendication 1, dans lequel
les premières informations de caractéristiques comportent des informations indiquant un contexte des données de série chronologique d'entrée.

3. Système de traitement d'informations (1) selon la revendication 2, dans lequel
les premières informations de caractéristiques comportent des informations indiquant une structure des données de série chronologique d'entrée.

4. Système de traitement d'informations (1) selon la revendication 3, dans lequel
les informations indiquant la structure sont des informations textuelles, et
les données de série chronologique d'entrée sont des données vocales de lecture à haute voix des informations textuelles.

5. Système de traitement d'informations (1) selon la revendication 4, dans lequel
les informations indiquant le contexte comportent des informations associées à un locuteur, ou des informations associées à un environnement dans lequel parle un locuteur, ou des informations relatives à un sujet dont parle un locuteur.

6. Système de traitement d'informations (1) selon la revendication 1, dans lequel
les premières informations de caractéristiques sont modifiées conformément à une instruction vocale d'utilisateur.

7. Système de traitement d'informations (1) selon la revendication 1, dans lequel
la section d'acquisition (131) est configurée pour acquérir des informations d'identification d'un locuteur correspondant aux premières informations de caractéristiques et aux secondes informations de caractéristiques, et
la section de génération (133) est configurée pour générer les données de série chronologique générées présentant des caractéristiques correspondant aux informations d'identification.

8. Procédé de traitement d'informations pour un système de traitement d'informations (1) comprenant un appareil de traitement d'informations (100) et un appareil terminal (200), le procédé étant **caractérisé par** :
la notification, par l'appareil terminal (200), à l'appareil de traitement d'informations (100), d'un ensemble de données d'apprentissage, l'ensemble de données d'apprentissage comportant des données de série chronologique d'entrée associées à des premières informations de caractéristiques, auxquelles une étiquette est attribuée, et à des secondes informations de caractéristiques, auxquelles aucune étiquette n'est attribuée ;
l'acquisition, par l'appareil de traitement d'informations (100), de l'ensemble de données d'apprentissage ;
l'identification, par le processeur de l'appareil de traitement d'informations (100), des premières informations de caractéristiques à partir des données de série chronologique d'entrée avec un réseau neuronal ;
l'inférence, par le processeur de l'appareil de traitement d'informations (100), des secondes informations de caractéristiques à partir des données de série chronologique d'entrée et des premières informations de caractéristiques avec le réseau neuronal ;
l'apprentissage, par le processeur de l'appareil de traitement d'informations (100), d'un paramètre du réseau neuronal ;
la génération, par un processeur de l'appareil de traitement d'informations (100), de données vocales de série chronologique générées présentant des caractéristiques indiquées par les premières informations de caractéristiques et les secondes informations de caractéristiques acquises, les données vocales de série chronologique générées étant générées avec le réseau neuronal ; et
l'acquisition, par un processeur de l'appareil terminal (200), de données vocales de série chronologique générées présentant des caractéristiques indiquées par les premières informations de caractéristiques et les secondes informations de caractéristiques, auprès de l'appareil de traitement d'informations (100) ;
dans lequel les données de série chronologique d'entrée sont des données vocales, et les premières informations de caractéristiques et les secondes informations de caractéristiques sont des informations indiquant des caractéristiques des données vocales, et
dans lequel l'appareil de traitement d'informations (100) et l'appareil terminal (200) sont connectés par un réseau (300).
